# EUROPEAN PATENT SPECIFICATION

(11) **EP 1 702 752 B1**
(45) Date of publication and mention of the grant of the patent: **17.07.2013**
(21) Application number: 04807713.5
(22) Date of filing: 24.12.2004
(51) Int. Cl.: B29C 33/68, B32B 33/00, C08G 18/40, C08G 18/62, C08G 18/79, C08G 18/80, C08G 18/81, C09D 175/16, C09J 175/06, D21H 27/00, B29C 39/14, B29C 39/18, B32B 27/12, D06N 3/00, D06N 3/06, D06N 3/14, B32B 3/30, B32B 7/06, B32B 27/08, B32B 27/10, B32B 27/18

(54) **EMBOSSED RELEASE PAPER FOR PRODUCTION OF SYNTHETIC LEATHER, SUPPORT THEREOF, SYNTHETIC LEATHER UTILIZING THE RELEASE PAPER AND PROCESS FOR PRODUCING THE SAME**
GEPRÄGTES TRENNPAPIER ZUR HERSTELLUNG VON KUNSTLEDER, STÜTZE DAFÜR, DAS TRENNPAPIER VERWENDENDES KUNSTLEDER UND HERSTELLUNGSVERFAHREN DAFÜR
PAPIER ANTIADHESIF GAUFRE DESTINE A LA PRODUCTION DE CUIR SYNTHETIQUE, SON SUPPORT, CUIR SYNTHETIQUE UTILISANT LE PAPIER ANTIADHESIF ET PROCEDE DE PRODUCTION ASSOCIE

(30) Priority: 26.12.2003 JP 2003432621; 15.06.2004 JP 2004177446; 22.12.2004 JP 2004371162; 22.12.2004 JP 2004371430
(43) Date of publication of application: 20.09.2006
(73) Proprietor: Dai Nippon Printing Co., Ltd., Tokyo 162-8001 (JP)
(72) Inventor: FUJIMORI, Naomi;, Yokkaichi-shi, Mie 5108530; (JP); SEKO, Toshiya;, Yokkaichi-shi, Mie 5108530; (JP); YAMADA, Katsuhiko;, Yokkaichi-shi, Mie 5108530; (JP); MUKAI, Mineo;, aga-cho 1-chome, Shinjuku-ku, Tokyo 1628 (JP); SHIINA, Noriyuki;, aga-cho 1-chome, Shinjuku-ku, Tokyo 1628 (JP)
(74) Representative: Müller-Boré & Partner Patentanwälte
(86) International application number: PCT/JP2004/019356
(87) International publication number: WO 2005/065937

(56) References cited:
- EP-A- 0 209 684
- EP-A- 0 547 462
- JP-A- 5 254 061
- JP-A- 5 261 867
- JP-A- 5 269 931
- JP-A- 58 144 187
- JP-A- 2001 164 476
- JP-A- 2001 293 817
- JP-A- 2002 361 815

## Description

The present invention relates to an embossed release paper for synthetic leather production, a synthetic leather using the release paper and a process for producing the synthetic leather. More particularly, the present invention relates to an embossed release paper using an ionizing radiation curing coating material having a specific composition.

An embossed release paper has hitherto been used as an in-process release paper for a synthetic leather. Further, for example, polyurethane (hereinafter referred to as "PU"), polyvinyl chloride (hereinafter referred to as "PVC"), and a combination of PU with PVC are known as materials for synthetic leathers.

A PU leather has been produced, for example, by coating a PU resin paste for a skin layer onto a release paper, drying and solidifying the coating at a temperature of 90 to 140°C, applying the assembly to a backing fabric with the aid of a two-component curing type PU-based adhesive, allowing a reaction to proceed in a curing room of 40 to 70°C for 2 to 3 days, and peeling off the release paper. In this process, in general, PU resins dissolvable in organic solvents have been used. In recent years, however, aqueous PU resins have become used in consideration of environmental problems. In this case, drying is sometimes carried out at a high temperature of 150 to 180°C.

A PVC leather has been produced, for example, by coating a PVC sol onto a release paper, heating the coating at 200 to 250°C to cause gelation, then forming a PVC expanded layer, applying the assembly to a backing fabric, and then peeling off the release paper.

A leather comprising a combination of PU with PVC (a semisynthetic leather) has been produced, for example, by coating a PU resin paste for a skin layer onto a release paper, drying and solidifying the coating, then applying the assembly to a backing fabric, and then peeling off the release paper.
Further, a split leather comprising any of these synthetic leathers to a natural leather is also known.

In the production of PVC leathers and semisynthetic leathers, a release paper produced by coating a silicone resin and embossing the coating to impart a concave-convex pattern is generally used. Since, however, the film forming temperature of PVC is relatively high, the use of this release paper is disadvantageous in that the embossability is poor and uneven gloss is likely to occur, making it difficult to repeatedly use the release paper.

On the other hand, in the production of PU leathers, since the film forming temperature of PU is below that of PVC, a release paper produced by extrusion coating a thermoplastic resin such as polypropylene or 4-methyl-1-pentene and then embossing the coating is used. The release paper for PU leathers has an excellent embossing capability for PU, is also good in releasability in the production of synthetic leathers using a two-component curing-type PU, and can be repeatedly used a number of times, but on the other hand, this release paper is disadvantageous in that, since the material for the release paper is a thermoplastic resin, the heat resistance is so low that the release paper cannot be used in the production of PVC leathers.

Due to the above problem, the release paper produced by extrusion coating of a thermoplastic resin has been used only in a part of the PVC leather and semisynthetic leather production, and, up to now, any release paper usable in both PVC leathers and PU leathers has not been developed.

In recent years, a release paper using an electron beam curing resin such as isodecyl acrylate, which is excellent in not only embossing capability but also heat resistance, has become used in both PU and PVC (Japanese Patent Publication No. 2780/1988). This embossed release paper is produced by coating an electron beam irradiation curing acrylate coating material composition onto an embossed aluminum plate, pressing a paper web covered with a base of pigment/binder against the coating face, applying an electron beam to the coating face through the paper web layer to cure the coating film of the coating material composition, and then separating the aluminum plate.

The above release paper, however, advantageously has excellent emboss reproducibility but is disadvantageous in that an isocyanate in a curing agent used in a two-component curing-type PU is reacted with an electron beam curing resin on the surface of release paper, and, consequently, the separation of the release paper is difficult.

The release paper suffers from an additional problem that, since, upon electron beam irradiation, the strength of paper is deteriorated, the release paper has lowered heat resistance and durability and, thus, upon the application of tension to the release paper within a high-temperature drying oven in the production of a synthetic leather, the release paper is broken, making it impossible to repeatedly use the release paper.

Further, since the coverage of the electron beam curing resin is large and 40 to 150 g/m², the production cost of the release paper is very high.

A release paper using a resin composed mainly of a compound containing an ethylenicaly unsaturated bond such as an epoxy acrylate resin curable upon exposure to an ionizing radiation has also been proposed (Japanese Patent Publication No. 10626/1989). The above embossed release paper is produced by coating a coating material, comprising an ethylenically unsaturated bond-containing compound as a main component, onto one side of paper to form an uncured coating layer, embossing the surface of the coating layer, and then exposing the embossed coating layer to an electron beam or ultraviolet light to cure the coating layer.

As in the release layer described above, up to now, this embossed release paper has not been put to practical use yet due to the difficulty of separating the two-component curing-type PU material.

In order to reduce the above problems, that is, to improve the heat resistance of the release paper and the releasability involved in the use of two-component curing-type PU, a method has been proposed in which an acryloyl group-containing silicone resin is used (for example, Japanese Patent Laid-Open No. 269931/1993 and Japanese Patent Laid-Open No. 62958/2001). The embossed release paper disclosed in Japanese Patent Laid-Open No. 269931/1993 is produced by providing a support comprising paper having a clay coating layer, providing an ionizing radiation curing resin layer on the support, coating an acryloyl group-containing silicone resin layer onto the ionizing radiation curing resin layer, embossing the surface of the coating, and then exposing the assembly to ultraviolet light or an electron beam to cure the ionizing radiation curing resin layer and the silicone resin layer.

In the above release paper, the resin as the starting material is expensive, and, further, the separability and processability are poor. Consequently, up to now, the release paper has not been put to practical use.

In the release paper of such a type that an uncured ionizing radiation curing resin layer is provided on a support, the surface of the coating is embossed and the ionizing radiation curing resin layer is then cured, as in the embossed release paper disclosed in Japanese Patent Publication No. 10626/1989 and Japanese Patent Laid-Open No. 269931/1993, the surface morphology of the cured ionizing radiation curing resin layer is influenced by the surface morphology of the uncured ionizing radiation curing resin layer before embossing. Therefore, when a release paper for providing a synthetic leather having glossy feeling is contemplated, the surface morphology of the uncured ionizing radiation curing resin layer before embossing should be suitable.

In the release paper using paper as a support, however, since concaves and convexes derived from paper fibers affect the surface of the uncured ionizing radiation curing resin layer, disadvantageously, it is difficult to provide a synthetic leather having glossy feeling. Further, this release paper suffers from an additional problem that, upon the application of tension to the release paper within a high-temperature drying oven in the production of the synthetic leather, the release paper using a low-heat resistant support is broken, making it impossible to repeatedly use the release paper.

JP 2002361815 A relates to a release paper and synthetic leather manufactured using the same, wherein the release paper is constituted by providing a releasable smoothing layer on one surface of substrate paper and applying a coating solution of a resin composition, which is prepared by uniformly dispersing inorganic and/or organic fine particles in a releasable resin, thereto to form a release layer having fine unevenness with an arithmetic average roughness (Ra) of 0.5 to 15 µm on its surface.

The present inventors have found that the use of a specific ionizing radiation curing resin can realize the provision of an embossed release paper for synthetic leather production, which has embossability, heat resistance and durability and, at the same time, has excellent separability from a two-pack curing type PU adhesive.

The present inventors further found that this release paper can be used in all of synthetic leathers such as PU, PVC, and semisynthetic leathers.

Furthermore, the present inventors have found that the use of a support formed of a specific material in a release paper can realize the application of the release paper to all of synthetic leathers such as PU, PVC, and semisynthetic leathers, satisfactory embossability, heat resistance and durability, and the production of synthetic leathers having glossy feeling.

It was also found that, when the content of a silicone compound in the release paper is regulated, excellent releasability can be maintained even after repeated use in the production of synthetic leathers. The present invention has been made based on such finding.

Accordingly, a first object of the present invention is to provide an embossed release paper for synthetic leather production, which has embossability, heat resistance and durability and, at the same time, has excellent separability from a two-pack curing type PU adhesive and can be used in all of synthetic leathers such as PU, PVC, and semisynthetic leathers, and to provide a process for producing the same.

A second object of the present invention is to provide an embossed release paper, which, even when synthetic leathers are produced by repeatedly using the release paper, has excellent releasability and embossability and can realize the production of synthetic leathers at low cost, and to provide a process for producing the same.

According to a first aspect of the present invention, there is provided an embossed release paper for synthetic leather production, comprising at least paper as a support and an ionizing radiation cured film provided on the paper, the upper part of the cured film having been embossed, characterized in that
the ionizing radiation cured film has been formed by applying an ionizing radiation to a coating liquid comprising at least an ionizing radiation curing composition having a softening point of 40°C or above, to cure the ionizing radiation curing composition, the ionizing radiation curing composition comprising
a product of a reaction of an isocyanate compound with an (meth)acrylic compound containing an (meth)acryloyl group and reactive with the isocyanate compound, or
a product of a reaction of an isocyanate compound with an (meth)acrylic compound containing an (meth)acryloyl group and reactive with the isocyanate compound, and a compound free from an (meth)acryloyl group and reactive with an isocyanate group.

According to a second aspect of the present invention, there is provided a process for producing the above embossed release paper for synthetic leather production, characterized by comprising the steps of:
coating a coating liquid onto a surface of a support at a coverage of 1 to 40 g/m² on a dry basis to form a coating film;
vaporizing the solvent from the coating film to dry the coating film;
embossing either the dried coating film or the support and the dried coating film simultaneously; and
applying an ionizing radiation to the coating film to form an ionizing radiation cured film,
the coating liquid comprising at least an ionizing radiation curing composition having a softening point of 40°C or above, the ionizing radiation curing composition comprising
a product of a reaction of an isocyanate compound with an (meth)acrylic compound containing an (meth)acryloyl group and reactive with the isocyanate compound, or
a product of a reaction of an isocyanate compound with an (meth)acrylic compound containing an (meth)acryloyl group and reactive with the isocyanate compound, and a compound free from an (meth)acryloyl group and reactive with an isocyanate group,
the coating liquid having been diluted with 10 to 1000 parts by weight of the solvent based on 100 parts by weight on a solid basis of the coating liquid.

According to a third aspect of the present invention, there is provided a process for producing a synthetic leather using an embossed release paper, characterized by comprising the steps of:
coating a polyurethane resin composition onto the embossed ionizing radiation cured film and heat drying the coating to form a skin layer;
laminating a backing fabric onto the skin layer through an adhesive to form a synthetic leather layer; and
separating the release paper from the synthetic leather layer.

According to a fourth aspect of the present invention, there is provided a synthetic leather characterized by being produced by using the embossed release paper, the proportion of silicone-derived silicon present on the synthetic leather in its separated surface obtained by separating the release paper being not more than 20%.

According to a fifth aspect of the present invention, there is provided an embossed release paper as defined above for synthetic leather production, the support comprising a base paper having a clay coating layer on its one side, characterized in that
the base paper has such a heat resistance that the tensile strength as measured after standing at 230°C for 3 min by the measuring method specified in JIS P 8113 is maintained at not less than 10 kN/m at least in the machine direction and the tear strength as measured after standing at 230°C for 3 min by the measuring method specified in JIS P 8116 is maintained at not less than 500 mN in both the machine direction and cross direction, and
the clay coat layer has a smoothness of not less than 100 sec as measured by the measuring specified in JIS P 8119 and has been formed so that surface irregularities derived from pulp fibers constituting the base paper are absorbed, wherein the base paper is a neutral base paper and has been made by using a mixed pulp composed of a hardwood pulp and a softwood pulp and the content of the hardwood pulp in the mixed pulp is 50 to 90%.

The first to third aspects of the present invention can realize embossed release papers for synthetic leather production, which have embossability, heat resistance and durability and, at the same time, have excellent separability from a two-pack curing type PU adhesive and can be used in all of synthetic leathers such as PU, PVC, and semisynthetic leathers.

The fourth aspect of the present invention can realize an embossed release paper, which, even when synthetic leathers are produced by repeatedly using the release paper, has excellent releasability and embossability and can realize the production of synthetic leathers at low cost.

The fifth aspect of the present invention can realize an embossed release paper, which can be used in all of synthetic leathers such as PU, PVC, and semisynthetic leathers has embossability, heat resistance and durability and, at the same time, can realize the production of synthetic leathers having glossy feeling.

Fig. 1 is a diagram showing an embodiment of a production process of an embossed release paper for synthetic leather production according to the present invention.
Fig. 2 is a cross-sectional view of a support for an embossed release paper for synthetic leather production according to the present invention.
Fig. 3 is a cross-sectional view of an embossed release paper for synthetic leather production according to the present invention.

### (1) Embossed release paper for synthetic leather production and production process thereof

The embossed release paper for synthetic leather production according to the present invention comprises at least paper as a support and an ionizing radiation cured film provided on the paper. The upper part of the cured film has been embossed, and the ionizing radiation cured film has been formed by applying an ionizing radiation to a coating liquid. This coating liquid will be first described.

### Coating liquid

The coating liquid used in the present invention is a composition containing an ionizing radiation curing composition having a softening point of 40°C or above, the ionizing radiation curing composition comprising
a product of a reaction of an isocyanate compound with an (meth)acrylic compound containing an (meth)acryloyl group and reactive with the isocyanate compound, or
a product of a reaction of an isocyanate compound with an (meth)acrylic compound containing an (meth)acryloyl group and reactive with the isocyanate compound, and a compound free from an (meth)acryloyl group and reactive with an isocyanate group.

As used herein, the term "(meth)acryloyl group" refers to an acryloyl group and/or a methacryloyl group, the term "(meth)acrylic compound" refers to an acrylic compound and/or a methacrylic compound, the term "(meth)acrylate" refers to acrylate and/or methacrylate, and the term "(meth)acrylic acid" refers to acrylic acid and/or methacrylic acid.

The isocyanate compound used in the present invention is a compound containing at least one isocyanate group, preferably a compound containing two or more isocyanate groups. Examples of such isocyanate compounds include aliphatic isocyanates such as phenyl isocyanate, xylyl isocyanate, naphthyl isocyanate, hexamethylene diisocyanate, lysine methyl ester isocyanate, and 2,4,4-trimethylhexamethylene diisocyanate, alicyclic isocyanates such as isophorone diisocyanate and 4,4'-methylenebis(cyclohexyl isocyanate), aromatic isocyanates such as tolylene diisocyanate, 4,4'-diphenylmethane diisocyanate, and naphthalene-1,5'- diisocyanate, and, further, a trimer of tolylene diisocyanate and a product of a reaction between a tolylene diisocyanate and an active hydrogen compound, for example, trimethylolpropane at a ratio of 3 : 1 (molar ratio).

Further, for example, compounds containing an isocyanate group attached to a nonaromatic hydrocarbon ring, that is, trimers of the so-called alicyclic isocyanate compounds, or a product of a reaction thereof with an active hydrogen compound are preferred. Preferably, isophorone diisocyanate, which is easily commercially available, are used as the alicyclic isocyanate compound. Hydrogenated tolylene diisocyanate, hydrogenated xylylene diisocyanate, hydrogenated diphenylmethane diisocyanate and the like may also be used.

Trimer of isophorone diisocyanate, or a product of a reaction between isophorone diisocyanate and trimethylolpropane (molar ratio 3 : 1) is preferred as the isocyanate compound used in the present invention. The isophorone diisocyanate trimer is further preferred. A plurality of isocyanate compounds may be used in combination.

An (meth)acrylic compound containing a hydroxyl group and/or a carboxyl group may be mentioned as the (meth)acrylic compound containing an (meth)acryloyl group and reactive with an isocyanate compound. The "(meth)acrylic compound containing an (meth)acryloyl group and reactive with an isocyanate compound" will be hereinafter often referred to as "specific (meth)acrylic compound."

The product of a reaction between the isocyanate compound and the specific (meth)acrylic compound containing a hydroxyl group is generally called "urethane acrylate." The product of a reaction between the isocyanate compound and the specific (meth)acrylic compound containing a carboxyl group can be brought to a compound having a structure in which a polymerizable (meth)acryloyl group has been attached through an amide group. These will be described.

A hydroxyl ester, which is a product of a reaction between (meth)acrylic acid and a polyhydroxy compound, may be mentioned as a typical specific (meth)acrylic compound containing a hydroxyl group. Further, a compound prepared by adding ethylene oxide, propylene oxide, caprolactone or the like to the hydroxyl group in the hydroxyl ester may also be mentioned as the specific (meth)acrylic compound containing a hydroxyl group. Further, a compound prepared by esterifying a part of the hydroxyl group in the hydroxy ester with a monocarboxylic acid is also possible.

Examples of such compounds include hydroxy (meth)acrylates such as hydroxyethyl (meth)acrylate, hydroxypropyl (meth)acrylate, hydroxybutyl (meth)acrylate, trimethylolpropane diacrylate, pentaerythritol triacrylate, dipentaerythritol tetraacrylate, and dipentaerythritol pentaacrylate, isocyanuric acid diacrylate, pentaerythritol diacrylate monostearate, 2-hydroxy-3-phenoxypropyl acrylate, and, further, their caprolactone adducts, ethylene oxide adducts, propylene oxide adducts, and ethylene oxide-propylene oxide adducts.

A hydroxyl group in epoxy acrylate may also be utilized. Specific examples of such compounds include epoxy acrylates produced by reacting acrylic acid with a compound containing two epoxy groups in one molecule, such as neopentyl glycol diglycidyl ether, 1,6-hexanediol diglycidyl ether, hydrogenated bisphenol A diglycidyl ether, ethylene glycol diglycidyl ether, or propylene glycol diglycidyl ether. These components contain two (meth)acryloyl groups in one molecule and thus can also function to improve the crosslinking density.

Specific (meth)acrylic compounds containing a carboxyl group include (meth)acrylic acid per se, and compounds produced by reacting the above hydroxy (meth)acrylate with a carboxylic anhydride, for example, maleic anhydride, succinic anhydride, phthalic anhydride, and tetrahydrophthalic anhydride.

Some examples of such compounds include pentaerythritol triacrylate succinic acid monoester, dipentaerythritol pentaacrylate succinic acid monoester, pentaerythritol triacrylate maleic acid monoester, dipentaerythritol pentaacrylate maleic acid monoester, pentaerythritol triacrylate phthalic acid monoester, dipentaerythritol triacrylate phthalic acid monoester, pentaerythritol triacrylate tetrahydrophthalic acid monoester, dipentaerythritol pentacrylate tetrahydrophthalic acid monoester.

In the reaction of the isocyanate compound with the specific (meth)acrylic compound, other active hydrogen compound reactive with the isocyanate compound may also be used in combination of these compounds. That is, a compound free from an (meth)acryloyl group and reactive with the isocyanate group may be used in combination with these compounds.

When the active hydrogen compound is selected and used in combination with the isocyanate compound and the specific (meth)acrylic compound depending upon the purpose, the softening point of the resultant curable composition is increased, or the flexibility of the final cured coating film is increased. Hydroxyl group-containing compounds are generally used as this active hydrogen-containing compound. Alternatively, for example, amino group-containing compounds and carboxyl group-containing compounds may also be used.

Hydroxyl group-containing compounds usable herein include polyhydric alcohols containing three or more hydroxyl groups such as glycerin, trimethylolpropane, trimethylolethane, 1,2,6-hexanetriol, 2-hydroxyethyl-1,6-hexanediol, 1,2,4-butanetriol, erythritol, sorbitol, pentaerythritol, and dipentaerythritol; aliphatic glycols such as ethylene glycol, diethylene glycol, propylene glycol, dipropylene glycol, tripropylene glycol, 1,2-butanediol, 1,3-butanediol, 1,4-butanediol, 2,3-butanediol, 2-methyl-1,3-propanediol, 2,2-diethyl-1,3-propanediol, 2-methyl-2-propyl-1,3-propanediol, 2-butyl-2-ethyl-1,3-propanediol, 1,5-pentanediol, 3-methyl-1,5-pentanediol, 2-methyl-2,4-pentanediol, 1,6-hexanediol, 2-ethyl-1,3-hexanediol, neopentyl glycol, 1,3,5-trimethyl-1,3-pentanediol, 2,2,4-trimethyl-1,3-pentanediol, 1,8-octanediol, 1,9-nonanediol, and 2-methyl-1,8-octanediol; alicyclic glycols such as 1,4-cyclohexanediol and 1,4-cyclohexanedimethanol; and aromatic glycols such as xylylene glycol and bishydroxyethoxybenzene.

Further, high-molecular weight polyols such as polyether polyols, polyester polyols, polyether ester polyols, polycarbonate polyols, and polyacrylic polyols may also be used. Polyether polyols includes bisphenol A and glycols such as ethylene glycol, propylene glycol, and diethylene glycol, polyols containing three or more hydroxyl groups such as glycerin, trimethylolethane, trimethylolpropane, and pentaertythritol, or polyols produced by addition polymerization of polyamines such as ethylenediamine or toluenediamine and an alkylene oxide such as ethylene oxide or propylene oxide, and polytetramethylene ether glycols produced by ring opening polymerization of tetrahydrofuran.

Polyester polyols include those produced by a polycondensation reaction of carboxylic acids, for example, dicarboxylic acids such as succinic acid, adipic acid, sebacic acid, azelaic acid, or phthalic acid, or tri- or tetracarboxylic acids such as trimellitic acid or pyromellitic acid, with diols such as ethylene glycol, propylene glycol, 1,4-butanediol, 1,5-pentanediol, 3-methyl-1,5-pentanediol, 2,2-diethylpropanediol, 2-ethyl-2-butylpropanediol, 1,6-hexanediol, neopentyl glycol, diethylene glycol, 1,4-cyclohexanediol, and 1,4-cyclohexanedimethanol, triols such as trimethylolpropane or glycerin, or aromatic polyhydroxy compounds such as bisphenol A or bisphenol F.

Polyether ester polyols include those produced by reacting polyester glycols with alkylene oxides and those produced by reacting ether group-containing diols or a mixture thereof with other glycol, with the above dicarboxylic acids or their anhydrides, for example, poly(polytetramethylne ether) adipate. Polycarbonate polyols include, for example, those produced by a dealcoholization condensation reaction of polyhydric alcohols with dimethyl, diethyl or other dialkyl carbonates, those produced by a dephenolization condensation reaction of polyhydric alcohols with diphenyl carbonate, and those produced by a deethyleneglycolization condensation reaction of a polyhydric alcohol with ethylene carbonate. Polyhydric alcohols usable in these condensation reactions include, for example, aliphatic diols such as 1,6-hexanediol, diethylene glycol, propylene glycol, 1,4-butanediol, 1,5-pentanediol, 3-methyl-1,5-pentanediol, 2,2-diethylpropanediol, 2-ethyl-2-butylpropanediol, and neopentylglycol, or alicyclic diols such as 1,4-cyclohexanediol and 1,4-cyclohexanedimethanol.

Amino group-containing compounds (amine compounds) include hexamethylenediamine, xylylenediamine, isophoronediamin, and N,N-dimethylethylenediamine. Further, amino alcohols such as monoethanolamine and diethanolamine may also be used as the active hydrogen-containing compound.

Carboxyl group-containing compounds (organic carboxylic acids) include lauric acid, stearic acid, oleic acid, palmitic acid, adipic acid, sebacic acid, phthalic acid, isophthalic acid, and terephthalic acid.

In order that the properties of a product of a reaction between the isocyanate compound and the specific (meth)acrylic compound are not sacrificed, preferably, these active hydrogen compounds other than the specific (meth)acrylic compound are used so that the molar ratio of the reactive group in the active hydrogen compound to the reactive group in the specific (meth)acrylic compound is not more than 50%, particularly preferably not more than 40%.

The reaction of the isocyanate compound with the specific (meth)acrylic compound is preferably carried out in a solvent. The use of the solvent is advantageous in that the reaction can easily be controlled, and the viscosity of the reaction product can be regulated. Solvents usable herein include inert solvents commonly used in this type of reaction, for example, aromatic hydrocarbon solvents such as toluene and xylene, ketone solvents such as methyl ethyl ketone, methyl isobutyl ketone, and cyclohexanone, ester solvents such as ethyl acetate, butyl acetate, and isobutyl acetate, glycol ether ester solvents such as diethylene glycol ethyl ether acetate, propylene glycol methyl ether acetate, 3-methyl-3-methoxybutyl acetate, and ethyl-3-ethoxypropionate, ether solvents such as tetrahydrofuran and dioxane, and aprotic polar solvents such as N-methylpyrrolidone.

In the reaction, reaction starting materials may be added to a solvent so that the concentration of the reaction product in the solution after the reaction is 30 to 80% by weight, followed by a reaction at 50 to 80°C optionally in the presence of 0.01 to 0.1% by weight, based on the reaction starting materials, of an organotin catalyst. The charge ratio between the isocyanate compound and the specific (meth)acrylic compound and optionally used other active hydrogen compound is preferably that, based on one mole of the isocyanate group in the isocyanate compound, the amount of the functional group in the specific (meth)acrylic compound and other active hydrogen compound reactive with the isocyanate compound is not less than 0.5 mole, particularly preferably not less than 1 mole. The reaction time is generally 3 to 8 hr. Preferably, however, the reaction is stopped at the time when, in the trace of the content of the isocyanate group in the reaction solution by analysis, the content of the isocyanate group reached a target value.

The ionizing radiation curing composition according to the present invention is a product of a reaction between the isocyanate compound and the specific (meth)acrylic compound and has a softening point of 40°C or above. The softening point of the ionizing radiation curing composition is preferably 50°C or above, more preferably 60°C or above. When the softening point of the ionizing radiation curing composition is below 40°C, blocking occurs in the coating film before curing, or the embossability is poor.

The softening point specified in the present invention refers to a softening point of a residue obtained by removing the solvent from the reaction product as measured under the following conditions.
Measuring apparatus: ARES-2KFRTNI, manufactured by Rheometrix Corp.
Measuring mode: Test on temperature dependency of dynamic viscoelasticity, 25-mm parallel plate
Measuring temperature range: -50 to 150°C
Vibration frequency: 1 rad/sec
In the measurement under the above conditions, the temperature at which the melt viscosity is 5000 Pa·sec, is defined as the softening point.

The content of the (meth)acryl group in the ionizing radiation curing composition according to the present invention is preferably not less than 5% by weight, more preferably not less than 10% by weight, as calculated on the premise that the molecular weight of the olefinic double bond (-C=C-) is 24. When the content of the (meth)acryl group is low, the crosslinking density after curing by ionizing radiation irradiation is lowered. Consequently, the solvent resistance, heat resistance and the like are unsatisfactory, and unfavorable phenomena such as poor separation and shaping sag occurs in polyvinyl chloride film formation.

The content of the olefinic double bond is measured by IR, NMR or the like. When the production process is known, the content of the olefinic double bond can also be determined by calculation based on the charging amount of the starting material.

The coating liquid used in the present invention preferably contains, in addition to the above components, a silicone compound for imparting separability to the surface of the ionizing radiation cured film. In the present invention, as will be described later, when the ionizing radiation cured film has a multilayer structure of two or more layers, a silicone compound-free layer may be provided.

In the present invention, preferably, the proportion of silicone-derived silicon present on the surface of the ionizing radiation cured film (that is, the face separated from a synthetic leather) is 5 to 30%, and the proportion of silicone-derived silicon present on the surface of the ionizing radiation cured film after the repetition of the production of a synthetic leather using the release paper by 5 times is not less than 5%. The expression "proportion of silicone-derived silicon" as used herein means atomic% of silicon atom among atoms (excluding hydrogen atom) detected from the surface of the release paper by X-ray photoelectron spectroscopy (hereinafter referred to as "XPS"). When the proportion of silicon present on the surface of the ionizing radiation cured film is 5 to 30%, in the use of the release paper in the synthetic leather production, excellent releasability can be maintained. Further, it was found that when the proportion of silicone-derived silicon present on the surface of the ionizing radiation cured film after the repetition of the production of a synthetic leather using the release paper according to the present invention by 5 times is not less than 5%, the separability of the release paper can be satisfactorily maintained in the synthetic leather production while repeatedly using the release paper.

The content of the silicone compound in a coating liquid containing the ionizing radiation curing composition is not more than 20% by weight, preferably 0.5 to 20% by weight, more preferably 1 to 15% by weight. When the content of the silicone compound is larger than 20% by weight, the coating film is tacky or the cost is high. On the other hand, when the content of the silicone compound is less than 0.5% by weight, the effect of improving the separability is unsatisfactory.

The silicone compound used in the present invention may be reactive or nonreactive. Reactive silicone compounds include (meth)acryloyl modified, vinyl modified, amino modified, mercapto modified, epoxy modified, carboxyl modified, phenol modified, and alcohol modified silicone compounds.

More specific examples of reactive silicone compounds include (meth)acryloyl modified silicones such as X-22-164B and X-22-164C (manufactured by The Shin-Etsu Chemical Co., Ltd.) and FM-0711, FM-0721, and FM0725 (manufactured by Chisso Corp.), vinyl modified silicones such as XF40-A1987 (manufactured by Toshiba Silicone Co., Ltd.), amino modified silicones such as TSF4700, TSF4702, and TSF4705 (manufactured by Toshiba Silicone Co., Ltd.), X-22-161AS, KF393, and KF864 (manufactured by The Shin-Etsu Chemical Co., Ltd.), and BY16-208 and SF8417 (manufactured by Dow Corning Toray Silicone Co., Ltd.), mercapto modified silicones such as X-22-167B and KF-2001 (manufactured by The Shin-Etsu Chemical Co., Ltd.), epoxy modified silicones such as YF3965 and TSF4730 (manufactured by Toshiba Silicone Co., Ltd.), KF105 and X-22-169AS (manufactured by The Shin-Etsu Chemical Co., Ltd.), and SF8421 and SF8413 (manufactured by Dow Corning Toray Silicone Co., Ltd.), carboxy modified silicones such as TSF4770 and XF-A9248 (manufactured by Toshiba Silicone Co., Ltd.), X-22-162A and X-22-3701E (manufactured by The Shin-Etsu Chemical Co., Ltd.), and SF8418 and BY-16-750 (manufactured by Dow Corning Toray Silicone Co., Ltd.), phenol modified silicones such as X-22-165B (manufactured by The Shin-Etsu Chemical Co., Ltd.), and BY16-752 and BY16-150C (manufactured by Dow Corning Toray Silicone Co., Ltd.), and alcohol modified silicones such as TSF4750 and TSF4751 (manufactured by Toshiba Silicone Co., Ltd.), BY16-848 and BY16-201 (manufactured by Dow Corning Toray Silicone Co., Ltd.) and FM-4411, FM-4425, FM-0411, FM-0425 and FM-DA21 (manufactured by Chisso Corp.).

Further, silicone compounds synthesized using these reactive silicones may be used. A reactive group may be present or absent in the synthesized silicone compound. Silicone compounds synthesized using the reactive silicone include silicone modified (meth)acrylic polymers and silicone modified (meth)acrylates using (meth)acryloyl modified silicones; silicone modified epoxy acrylates using epoxy modified silicones; and silicone modified urethane polymers and silicone modified urethane acrylates using alcohol modified silicones. Among them, silicone modified urethane acrylates are particularly preferred.

Nonreactive silicone compounds include reactive group-free silicone compounds as described above. Specific examples of such compounds include dimethylpolysiloxanes such as TSF451 and YF3800 (manufactured by Toshiba Silicone Co., Ltd.), KF96A (manufactured by The Shin-Etsu Chemical Co., Ltd.), and SH200 (manufactured by Dow Corning Toray Silicone Co., Ltd.); methylphenylpolysiloxanes such as TSF433 and TSF434 (manufactured by Toshiba Silicone Co., Ltd.) and SH510 and SH702 (manufactured by Dow Corning Toray Silicone Co., Ltd.); and polyether modified silicones such as TSF4440 and TSF 4445 (manufactured by Toshiba Silicone Co., Ltd.), KF-351 and KF-353 (manufactured by The Shin-Etsu Chemical Co., Ltd.), SH3746 and SH3748 (manufactured by Dow Corning Toray Silicone Co., Ltd.) and SS-2803 and SS-2801 (manufactured by Nippon Unicar Co., Ltd.).

These silicone compounds may be used solely or in a combination of two or more. Both the reactive and nonreactive silicone compounds may also be used. From the viewpoint of compatibility with other component and the like, preferably, the silicone compound has a ring structure such as an aromatic, alicyclic or isocyanuric acid skeleton. Silicone compounds having a ring structure include silicone compounds with a phenyl group introduced into the side chain such as methylphenylsilicone and silicones produced by introducing a ring structure using a reactive silicone. Silicones produced by introducing a ring structure using a reactive silicone include silicone compounds containing a phenyl group introduced by copolymerizing (meth)acryloyl modified silicones with styrene, and silicone compounds produced by introducing a ring structure into a silicone modified urethane polymer or a silicone modified urethane acrylate, for example, using a monomer or trimer of diphenylmethane diisocyanate, naphthalene diisocyanate, or isophorone diisocyanate. A reactive group may be present or absent in these silicone compounds having a ring structure.

In the present invention, preferably, the ionizing radiation cured film layer has a multilayer structure of two or more layers, because the occurrence of pinholes can be further reduced. Preferably, 0.5 to 20% by weight of the silicone compound is contained in at least one of the two or more layers. More preferably, 0.5 to 20% by weight of the silicone compound is contained in the uppermost layer located in the multilayer structure on its side remote from the support (that is, the face separated from the synthetic leather). When the silicone compound is contained on the uppermost layer face, the releasability can be improved. Further, even when the release paper is repeatedly used in the synthetic leather production, the releasability of the release paper can be satisfactorily maintained. When the ionizing radiatioan cured film has a multilayer structure of two or more layers, the layer(s) other than the uppermost layer may not contain the silicone compound.

The coating liquid used in the present invention may contain, in addition to the silicone compound, optionally a film forming resin, an inorganic pigment and the like for modifying curing properties of the reaction product.

In this case, more preferably, the lowermost layer contains 0.5 to 50% by weight, particularly preferably 1 to 10% by weight, of the inorganic pigment. Inorganic pigments usable herein include talc, kaolin, silica, calcium carbonate, barium sulfate, titanium oxide, and zinc oxide.

In a more preferred embodiment, 0.5 to 50% by weight of an inorganic pigment is contained in the lowermost layer provided on the support side, and 0.5 to 20% by weight of a silicone compound is contained in the uppermost layer located in the multilayer structure on its side remote from the support. When the inorganic pigment is contained in the support side layer while the silicone compound is contained in the layer remote from the support side (layer on the face side separated form the synthetic leather), excellent separability can be imparted to the release layer. The reason for this has not been elucidated yet but is believed to reside in that, for example, when the inorganic pigment and the silicone compound are contained in an identical ionizing radiation cured film layer, in some cases, the silicone compound is influenced by the inorganic pigment depending upon coating conditions of the coating liquid (for example, adsorption of the silicone compound to the inorganic pigment). For example, when importance is placed on design effect, for example, imparting of matte feeling to the surface of the release paper, the inorganic pigment may be added to the uppermost layer disposed on the side remote from the support.

Film forming resins usable herein include methacrylic resins, chlorinated polypropylene, epoxy resins, polyurethane resins, polyester resins, polyvinyl alcohols, and polyvinylacetals. These film forming resins may or may not contain a reactive group. Reactive groups include (meth)acryloyl, vinyl, amino, mercapto, epoxy, carboxyl, phenol, and hydroxyl groups. Methacrylic resins are preferred, for example, from the viewpoints of adhesion to the base material and film forming properties. Methacrylic resins having a glass transition temperature (Tg) of 40°C or above are preferred from the viewpoint of embossability. A Tg value of 50°C or above is further preferred. In addition to conventional methacrylic compounds, for example, maleic anhydride, methacrylic acid, styrene, hydroxyethyl methacrylate, maleimide group-containing methacrylate, and isobornyl group-containing methacrylate may be used as the comonomer component.

The amount of the resin having film forming properties used is generally not more than 70% by weight, preferably 1 to 70% by weight, more preferably 20 to 60% by weight, in terms of the content of the resin in the coating liquid. When the amount of the resin exceeds 70% by weight, that is, when the amount of the ionizing radiation curing composition is less than 30% by weight, the heat resistance after curing by ionizing radiation irradiation is unsatisfactory. The incorporation of a suitable amount of the film forming resin has the effect of improving the adhesion to the base material, film forming properties and the like.

Further, the coating liquid may contain, in addition to or instead of the above film forming resin and silicone compound, for example, reactive monomers, reactive oligomers, pigments, photopolymerization initiators, polymerization inhibitors, colorants, and surfactants.

Preferred reactive monomers include methyl (meth)acrylate, ethyl (meth)acrylate, propyl (meth)acrylate, butyl (meth)acrylate, ethylhexyl (meth)acrylate, stearyl (meth)acrylate, lauryl (meth)acrylate, tridecyl (meth)acrylate, trimethylolpropane triacrylate, tris(acryloxyethyl) isocyanurate, pentaerythritol tetraacrylate, and dipentaerythritol hexaacrylate.

Preferred reactive oligomers include epoxy acrylate, urethane acrylate, polyester acrylate, and polyether acrylate.

Photopolymerization initiators usable herein include benzoin ethyl ether, acetophenone, diethoxyacetophenone, benzyl dimethyl ketal, 2-hydroxy-2-methylpropiophenone, 2-methyl-1-[4-(methylthio)phenyl]-2-morpholinopropane-1,1-h ydroxycylcohexyl phenyl ketone, benzophenone, p-chlorobenzophenone, Michler's ketone, isoamyl N,N-dimethylaminobenzoate, 2-chlorothioxanthone, and 2,4-diethylthioxanthone.

A solvent may be properly added to give a viscosity suitable for coating, followed by coating. Solvents usable herein include, for example, aromatic hydrocarbon solvents such as toluene and xylene, ketone solvents such as methyl ethyl ketone, methyl isobutyl ketone, and cyclohexanone, ester solvents such as ethyl acetate, butyl acetate, and isobutyl acetate, glycol ether ester solvents such as diethylene glycol ethyl ether acetate, propylene glycol methyl ether acetate, propylene glycol monomethyl ether, 3-methyl-3-methoxybutyl acetate, and ethyl-3-ethoxypropionate, ether solvents such as tetrahydrofuran and dioxane, and aprotic polar solvents such as N-methylpyrrolidone.

### Ionizing radiation cured film

The ionizing radiation cured film constituting the release paper according to the present invention is formed by coating the above coating liquid and curing the coating. The coating liquid may be used after dilution generally with 10 to 1000 parts by weight of a solvent based on 100 parts by weight of the solid content. Dilution with the solvent can impart a proper viscosity, for example, a viscosity of 10 to 3000 mPa·sec at 25°C, to the coating liquid and, at the same time, in the step of drying the coating, can realize proper transfer of the silicone compound onto the surface.

The coating liquid may be coated by conventional methods such as direct gravure coating, reverse gravure coating, gravure offset coating, microgravure coating, direct roll coating, reverse roll coating, curtain coating, knife coating, air knife coating, bar coating, die coating, and spray coating. After coating onto a paper base material, the solvent is evaporated in a drying oven to form a coating film.

Good embossability can be provided by coating the coating liquid at a coverage of 1 to 40 g/m², preferably 5 to 20 g/m² on a dry weight basis after the evaporation of the solvent.

The ionizing radiation cured film layer preferably has a multilayer structure of two or more layers. The adoption of the multilayer structure can further reduce the occurrence of pinholes. When the ionizing radiation cured film layer has a multilayer structure of two or more layers, preferably, the lowermost layer in the multilayer structure contains 0.5 to 50% by weight, particularly preferably 1 to 10% by weight, of an inorganic pigment. Suitable inorganic pigments usable herein include talc, kaolin, silica, calcium carbonate, barium sulfate, titanium oxide, and zinc oxide.

The ionizing radiation cured film layer may contain a silicone compound. In this case, the silicone compound may be contained only in the uppermost layer in the two or more layers constituting the ionizing radiation cured film layer, or alternatively may be contained in each of the layers.

The coating liquid is coated onto a support. Since the dried coating film is tack-free, after drying, the assembly including the paper base material may be wound without causing blocking. Embossing as post processing may be carried out offline. Good embossing without causing deposition of the coating liquid onto an emboss roll can be realized by properly setting the temperature of the emboss roll and the softening temperature of the coating liquid.

Embossing is generally carried out by transfer with a metal emboss roll having a concave-convex pattern for emboss formation. Alternatively, a belt-type or flat plate-type press may be used. When the emboss roll is used, both-side emboss in which a male die is provided in the emboss roll while a female die is provided in a backup roll, or one-side emboss in which concaves and convexes are not provided in the backup roll, may be used.

When the support with the coating liquid coated thereon is embossed from the top of the coating by using the above embossing device, the support is heated so that the temperature of the coating liquid is brought to 50 to 150°C. Preferably, this temperature is above the softening point of the ionizing radiation curing composition contained in the coating liquid and below the melting temperature of the resin. The heating is generally carried out by heating the roll per se, for example, by passing steam through the emboss roll. Alternatively, a preheating method may also be adopted in which the coating liquid is heated just before embossing.

In order to realize good tack-free properties and embossability, as described above, the softening point of the ionizing radiation curing composition is 40°C or above, preferably 50°C or above. When the softening point is below 40°C, the tack-free properties and embossability are unsatisfactory.

After embossing, ultraviolet light or electron beam is applied from the curable coating film side to cure the curable coating film formed by coating the coating liquid. Ultraviolet light sources usable herein include low pressure mercury lamps, medium pressure mercury lamps, high pressure mercury lamps, metal halide lamps, xenon lamps, and tungsten lamps. Electron beam irradiation methods include scanning methods, curtain beam methods, and broad beam methods, and 50 to 300 kV is suitable as the acceleration voltage of the electron beam.

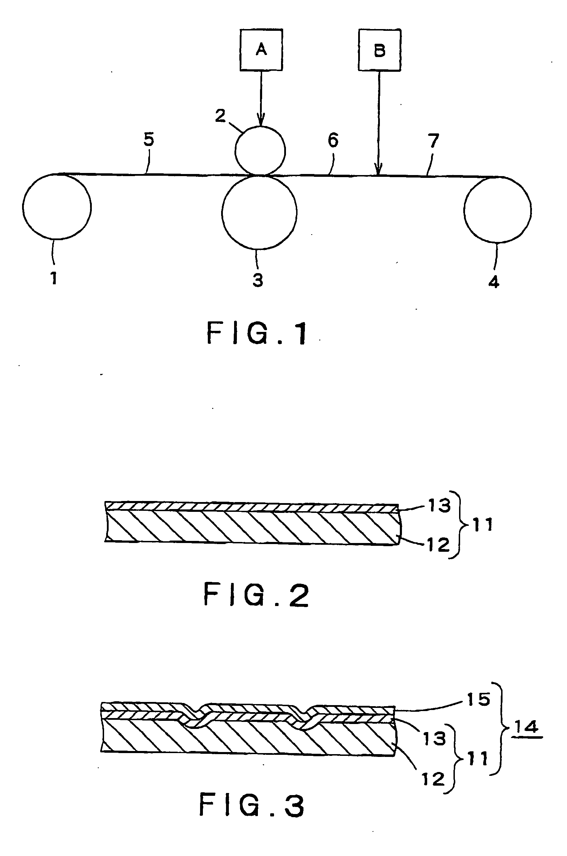

Fig. 1 is a diagram showing an embodiment of a production process of a release paper according to the present invention. In the drawing, numeral 1 designates a leading roll, numeral 2 an emboss roll, numeral 3 a backup roll, numeral 4 a winding roll, numeral 5 a paper with curable coating film, numeral 6 paper with an embossed curable coating film, and numeral 7 an embossed release paper. Character A designates the step of embossing, and character B the step of ionizing radiation irradiation.

### (2) Support for use in embossed release paper for synthetic leather production

Fig. 2 shows a support used in a release paper according to the present invention for synthetic leather production.
A support 11 of an embossed release according to the present invention paper for synthetic leather production comprises a base paper 12 and a clay coating layer 13 provided on the base paper 12. The base paper 12 is a neutral paper having such a heat resistance that, even when the base paper is allowed to stand at 230°C for 3 min, the tensile strength as measured by the testing method specified in JIS P 8113 is maintained at not less than 10 kN/m in the machine direction, and the tear strength as measured by the testing method specified in JIS P 8116 is maintained at not less than 500 mN in both the machine direction and the cross direction. The clay coating layer 13 is formed on the base paper so that the clay coating layer has a smoothness of not less than 100 sec as measured by the testing method specified in JIS P 8119 and can absorbs surface irregularities derived from pulp fibers in the base paper.

Accordingly, a release paper using the support according to the present invention has heat resistance high enough to withstand a temperature of 230°C necessary for the production of synthetic leathers of polyvinyl chloride resin, and the release paper can withstand repeated use five times or more in the synthetic leather production.

A mixture of a softwood pulp (N material) with a hardwood pulp (L material) is suitable as the pulp used in the base paper from the viewpoint of providing necessary strength and smoothness. In this case, in order to enhance the smoothness, the mixing ratio of the hardwood pulp (L material) is 50 to 90%. When the mixing ratio of the hardwood pulp (L material) is lower than 50%, the smoothness is disadvantageously lowered. On the other hand, when the mixing ratio of the hardwood pulp (L material) is more than 90%, the strength of the base paper is disadvantageously lowered. Fillers, paper strengthening agents, stabilizers and the like may be added to the starting material for pulp.

The base paper should be neutral paper from the viewpoint of imparting satisfactory heat resistance to the release paper. Sizing agents usable for neutral paper making include alkylketene dimers (AKDs), alkenyl succinic anhydrides, and canionic polymers. Among them, alkylketene dimers are preferred because they are relatively stable. When aluminum sulfate is used as a fixing agent, the strength of paper is significantly lowered at a high temperature of 200°C or above. Therefore, aluminum sulfate should not be used.

The basis weight of the base paper is preferably 100 to 200 g/m², for example, from the viewpoints of the strength as a release paper product, workability in the synthetic leather production, durability in repeated use of the release paper, and suitability for embossing. When the basis weight is lower than 100 g/m², curling or waving is likely to occur during the production of synthetic leathers. On the other hand, when the basis weight is larger than 200 g/m², embossability is deteriorated. Further, in this case, since the thickness of the release paper is increased, the diameter of the release paper wound is increased, leading to lowered working efficiency.

Base paper making may be carried out, for example, by using a Fourdrinier multi-cylindrical machine, a tanmo multi-cylindrical machine, an enmo (cylinder) multi-cylindrical machine, a Fourdrinier/tanmo combinational multi-cyclindrical machine, a Fourdrinier/ enmo (cylinder) combinational multi-cylinder machine, and a Fourdrinier Yankee machine.

The clay coating layer is formed from a coating material containing a binder such as styrene-butadiene latex, vinyl acetate latex, acrylic latex, starch, or casein and an inorganic pigment such as kaolin, calcium carbonate, talc, silica, titanium oxide, or aluminum hydroxide. The coating material is coated by using a coater such as an air knife coater, a blade coater, a rod coater, a transfer roll coater, a reverse roll coater, a gravure coater, a die coater, a notch bar coater, or a cast coater, or a combination of these coaters. The coverage of the coating material is preferably 5 to 40 g/m² from the viewpoint of providing necessary smoothness, that is, a smoothness of not less than 100 sec as measured by the testing method specified in JIS P 8119. When the coverage is less than 5 g/m², necessary smoothness cannot be provided. On the other hand, when the coverage is larger than 40 g/m², the embossability is deteriorated.

Clay coating onto the base paper may be continuously carried out in the step of papermaking, or alternatively may be carried out in a separate step. After coating of the coating material, the assembly can be passed through a calendar roll to enhance the surface smoothness.

In a more preferred embodiment of the support according to the present invention, the base paper is a neutral paper that comprises a mixed pulp composed of a hardwood pulp and a softwood pulp and having a hardwood pulp (L material) mixing ratio of 50 to 90% and has been made so as to have such a heat resistance that, even when the base paper is allowed to stand at 230°C for 3 min, the tensile strength as measured by the measuring method specified in JIS P 8113 is maintained at not less than 10 kN/m in the machine direction, and the tear strength as measured by the measuring method specified in JIS P 8116 is maintained at not less than 500 mN in both the machine direction and the cross direction. In order to provide this support, preferably, a clay coating layer is formed at a coverage of 5 to 40 g/m² on the base paper so as to have a smoothness of not less than 100 sec as measured by the measuring method specified in JIS P 8119. In this support for a release paper for synthetic leather production, a smooth ionizing radiation curing resin layer can be formed on the clay coating layer. Specifically, when the ionizing radiation curing resin layer provided on the support is embossed and is then exposed to an ionizing radiation to cure the ionizing radiation curing resin layer and thus to form an ionizing radiation cured film, the surface morphology of the ionizing radiation cured film is not influenced by concaves and convexes derived from the fibers of the base paper.

Fig. 3 shows a release paper for synthetic leather production formed using a support 11 for a release paper for synthetic leather production according to the present invention.

The release paper for synthetic leather production 14 according to the present invention is produced by carrying out the step of providing an uncured ionizing radiation curing resin film on a clay coating layer provided on a support, the step of embossing the uncured ionizing radiation curing rein film, and, after the embossing, the step of applying an ionizing radiation to the ionizing radiation curing resin film 15 to cure the ionizing radiation curing resin film.

The embossed release paper for synthetic leather production according to the present invention has heat resistance high enough to withstand a temperature of 230°C necessary for the production of synthetic leathers of vinyl chloride resins and can be repeatedly used five times or more in a synthetic leather production process. Further, since the release paper is not stretched in the transfer process, the pattern in the release paper can be transferred onto polyurethane resins, polyvinyl chloride or the like for a skin layer of synthetic leathers with high transfer accuracy. Further, since the base paper is not influenced by the concaves and convexes derived from pulp fibers, the release paper has a surface having glassy feeling. Therefore, a release paper, which can produce synthetic leathers having glassy feeling, can be provided.

In another embodiment of the present invention, for example, noncoated papers such as wood free paper, kraft paper, machine glazed kraft paper, pure white machine glazed paper, glassine paper, and cup base paper, and, further, coated papers such as inorganic pigment layer-coated art paper, coated paper, and cast coated paper, and synthetic papers not using natural pulp may be used as the support. When the use of the release paper particularly in the production of PVC leathers is contemplated, the use of neutral paper rather than acidic paper is preferred because heat resistance high enough to withstand embossing at a high temperature of 200°C or above is required. In the acidic paper, rosin sizing agents using aluminum sulfate as a fixing agent are used as the sizing agent. On the other hand, in the neutral paper, neutral sizing agents, not using aluminum sulfate as the fixing agent, for example, neutral rosin sizing agents, alkylketene dimers (AKDs), and alkenylsuccinic anhydrides (ASA), are used.

In order to realize good embossability, statisfactory strength, and proper smoothness, preferably, the pulp is a mixture composed of a softwood pulp and a hardwood pulp and having a softwood pulp content of not less than 20% and has a basis weight of 80 to 250 g/m².

Preferably, a seal layer formed of the above-described film forming resin or the film forming resin containing an inorganic pigment is provided on the support. The provision of the seal layer can suppress the formation of pinholes derived from the penetration of the coating liquid and further can impart smoothness.

Film forming resins usable for seal layer formation include polyvinyl alcohols, acrylic resins, styrene-acryl resins, cellulose derivatives, polyester resins, polyurethane resins, melamine resins, alkyd resins, aminoalkyd resins, polyvinyl chloride resins, and polyvinylidene chloride resins. The may be used solely or as a mixture of two or more.

Inorganic pigments which may be added to the resin include talc, kaolin, silica, calcium carbonate, barium sulfate, titanium oxide, and zinc oxide. The pigment is generally incorporated in an amount of 0.5 to 70% by weight based on the film forming resin. The coverage of the seal layer may be 0.5 to 20 g/m². When the coverage is below the lower limit of the above-defined range, the seal effect cannot be attained. On the other hand, when the coverage is above the upper limit of the above-defined range, the embossability is deteriorated. The sealing material may be coated in the same manner as in the coating liquid containing the ionizing radiation curing resin composition.

### (3) Synthetic leather produced using embossed release paper, and production process of synthetic leather

### Synthetic leather

For the synthetic leather produced using the above embossed release paper, the proportion of silicone-derived silicon present on the surface separated from the release paper is not more than 20%. When a synthetic leather is prepared by separation from the release paper, a certain amount of a silicone compound transferred from the release paper is present on the surface of the synthetic leather. The present inventors have found this fact by XPS analysis of the surface of the release paper and the surface of the synthetic leather. This means that the amount of the silicone compound transferred form the release paper (the proportion of silicone-derived silicon) even at a maximum is lower than the proportion of silicone-derived silicon present on the surface of the release paper. The present inventors have found that, even when synthetic leathers are produced using a release paper repeatedly, the proportion of silicone-derived silicon present on the surface separated from the release paper is not more than 20%.

Also when synthetic leathers are produced using the release paper according to the present invention repeatedly, the proportion of silicone-derived silicon present on the surface separated from the release paper is not more than 20%. Accordingly, even when the release paper is repeatedly used, the excellent separability of the release paper can be maintained.

### Process for producing synthetic leather in first embodiment

The process for producing a synthetic leather in a first embodiment according to the present invention comprises using an embossed release paper for synthetic leather production, comprising at least paper as a support and an ionizing radiation cured film provided on the paper, the upper part of the cured film having been embossed. This release paper will be described later.

At the outset, a polyurethane resin composition is coated onto the embossed ionizing radiation cured film in the above release paper, and the coating is heat dried to form a skin layer. One-component polyurethane resin composition of polyester-type aromatic isocyanate urethane, polyether-type aromatic isocyanate urethane, polycarbonate-type aromatic urethane, polyester-type aliphatic isocyanate urethane, polyether-type aliphatic urethane, or polycarbonate-type aliphatic isocyanate urethane may be suitably used as the polyurethane resin composition. The coated polyurethane resin is generally heat dried at 90 to 140°C although the drying temperature varies depending upon the composition of the polyurethane resin composition. In this case, the use of the release paper used in the present invention is advantageous in that, even in the case of drying at a high temperature of 150 to 250°C, there is no fear of causing the release paper to undergo deformation or the like, and embossing of the synthetic leather can be carried out well. A polyurethane resin layer for constituting a skin layer in a synthetic leather is formed on the embossed release paper.

Next, a backing fabric is applied onto the skin layer through an adhesive to form a synthetic leather layer. Adhesives usable herein include one-component polyurethane resins, two-component curing-type polyurethane resins, and melamine resins. When strength is required, the use of a two-component curing-type polyurethane resin is suitable. In the two-component curing-type polyurethane resin, two liquids, that is, a polyester, polyether, or polycarbonate prepolymer diol as a main agent, and an aromatic or aliphatic diisocyanate as a curing agent, are used, and, in use, these two liquids are mixed together. This mixture is allowed to react for use as an adhesive. After this adhesive is coated on the skin layer, a backing fabric is applied onto the adhesive coating, followed by drying and solidification of the adhesive to apply the skin layer to the backing fabric. The application of the skin layer to the backing fabric is generally carried out by allowing the adhesive to react in an aging chamber of 40 to 70°C for two or three days. In the present invention, the application of the skin layer to the backing fabric can be carried out by any of hot lamination and wet lamination. Hot lamination is more preferred. An assembly comprising skin layer applied to a backing fabric through an adhesive constitutes a synthetic leather.

Next, a synthetic leather is obtained by separating the release paper from the synthetic leather. The use of the release paper used in the present invention is advantageous in that, even when a PU resin is used as a skin layer, by virtue of excellent releasability of the release paper, synthetic leathers can be produced using the release paper repeatedly.

### Process for producing synthetic leather in second embodiment

The process for producing a synthetic leather in a second embodiment according to the present invention comprises using the same release paper as described above. A polyurethane resin composition is coated onto the embossed ionizing radiation cured film in the above release paper, and the coating is heat dried to form a skin layer. This step is the same as the first embodiment, and, thus, an explanation thereof will be omitted.

Next, a wet intermediate layer is stacked onto the skin layer, and the skin layer and the wet intermediate layer are contact bonded to each other by a hot roll from the release paper side. An assembly comprising the skin layer contact bonded to the wet intermediate layer constitutes a synthetic leather. The contact bonding is carried out by a hot roll, and the temperature of the hot roll is preferably 110 to 190°C. The wet intermediate layer is formed by coating a solution of one-component polyurethane resin dissolved in dimethylformamide (DMF) onto a backing fabric, and the assembly is immersed in water to replace DMF with water to solidify urethane. In the wet intermediate layer formed in this step, a microporous layer is formed. Accordingly, when the synthetic leather includes this wet intermediate layer, the synthetic leather has soft and voluminous feeling.

Next, a synthetic leather part (an assembly comprising the skin layer contact bonded to the intermediate synthetic leather layer) is cooled, and the release paper is then separated to produce a synthetic leather.

### Process for producing synthetic leather in third embodiment

The process for producing a synthetic leather in a third embodiment according to the present invention comprises using the same release paper as described above. A vinyl chloride resin composition is coated onto the embossed ionizing radiation cured film in the above release paper, and the coating is heat dried to form a skin layer. In the vinyl chloride resin composition, a homopolymer of vinyl chloride, or a polymer produced by copolymerizing a vinyl chloride monomer with a monomer such as vinyl acetate, ethylene, propylene, or maleic ester is usable. The vinyl chloride resin composition is prepared by adding a plasticizer such as a phthalic ester plasticizer or a fatty acid ester plasticizer to the above resin to prepare a paste and further adding an antioxidant, a stabilizer, a filler, a pigment and the like to the paste.

The coated vinyl chloride resin is generally solidified by heat drying at 200 to 250°C although the drying temperature varies depending upon the composition of the resin. In this case, the use of the release paper used in the present invention is advantageous in that, even in the case of drying at a high temperature of 200 to 250°C, there is no fear of causing the release paper to undergo deformation or the like, and embossing of the synthetic leather can be carried out well.

Next, an expandable vinyl chloride resin composition is coated on the skin layer formed of a vinyl chloride resin, and the coating is heated to form an intermediate layer. The expandable vinyl chloride resin composition may be such that an expanding agent such as azodicarbonamide or dinitrosopentamethylenetetramine has been added to the same composition as used in the skin layer. In general, this expandable vinyl chloride resin composition is coated onto the skin layer, and the coating is then heat dried at 180 to 250°C to expand the expandable vinyl chloride resin and thus to form an intermediate layer.

A backing fabric is applied onto the intermediate layer through an adhesive to form a synthetic leather layer. For example, a two-component curing-type polyurethane adhesive is suitable as the adhesive. After this adhesive is coated on the skin layer, a backing fabric is applied onto the adhesive coating, followed by drying and solidification of the adhesive to apply the skin layer to the backing fabric. The application of the skin layer to the backing fabric is generally carried out by allowing the adhesive to react in an aging chamber of 40 to 70°C for two or three days. An assembly having a construction of skin layer/intermediate layer/adhesive/backing fabric thus formed constitutes a synthetic leather.

Next, a synthetic leather is obtained by separating the release paper from the synthetic leather. The use of the release paper used in the present invention is advantageous in that, even when a PVC resin is used as a skin layer, by virtue of excellent releasability of the release paper, synthetic leathers can be produced using the release paper repeatedly.

### Process for producing synthetic leather in fourth embodiment

The process for producing a synthetic leather in a fourth embodiment according to the present invention comprises using the same release paper as described above. A polyurethane resin composition is coated onto the embossed ionizing radiation cured film in the above release paper, and the coating is heat dried to form a skin layer. This step is the same as the first embodiment, and, thus, an explanation thereof will be omitted.

An expandable vinyl chloride resin composition is coated onto the skin layer formed of the polyurethane resin, and the coating is heated to form an intermediate layer. The intermediate layer is the same as described above, and, thus, an explanation thereof will be omitted.

A backing fabric is applied onto the intermediate layer through an adhesive to form a synthetic leather layer. That is, an assembly having a construction of skin layer/intermediate layer/adhesive/backing fabric constitutes a synthetic leather.

Next, a synthetic leather is obtained by separating the release paper from the synthetic leather. The use of the release paper used in the present invention is advantageous in that, even in the case of the production of a synthetic leather using a combination of PU with PVC (a semi-synthetic leather), by virtue of excellent releasability of the release paper, synthetic leathers can be produced using the release paper repeatedly.

### [EXAMPLES]

The following Examples further illustrate the present invention. However, it should be noted that the present invention is not limited to these Examples, and various modifications and changes may be made within the scope of the present invention.

### 1. Embossed release paper according to first aspect of the present invention

### (1) Preparation of ionizing radiation curing composition

The following five types of ionizing radiation curing compositions were prepared.

### Ionizing radiation curing composition A

Ethyl acetate (206.1 g) and 133.5 g of a trimer of isophorone diisocyanate (VESTANAT T1890, manufactured by Degussa) were charged into a reactor equipped with a stirrer, a reflux condenser, a dropping funnel, and a thermometer and were heated to 80°C for dissolution. After air was blown into the solution, 0.38 g of hydroquinone monomethyl ether, 249.3 g of a mixture composed of pentaerythritol triacrylate and pentaerythritol tetraacrylate (Viscoat 300, manufactured by Osaka Organic Chemical Industry Ltd.), and 0.38 g of dibutyltin dilaurate were charged into the reactor. A reaction was allowed to proceed at 80°C for 5 hr, 688.9 g of ethyl acetate was then added, and the mixture was cooled. The resultant reaction product solution was analyzed by infrared absorption spectroscopy. As a result, it was confirmed that absorption attributable to an isocyanate group disappeared. Ethyl acetate was removed from the reaction product solution by evaporation, and the softening point of the residue was measured and was found to be 43°C.

### Ionizing radiation curing composition B

Methyl ethyl ketone (256.67 g) and 110 g of a trimer of isophorone diisocyanate were charged into a reactor equipped with a stirrer, a reflux condenser, a dropping funnel, and a thermometer and were heated to 80°C for dissolution. After air was blown into the solution, 0.30 g of hydroquinone monomethyl ether, 381.2 g of a mixture composed of dipentaerythritol hexaacrylate and dipentaerythritol pentaacrylate (KAYARAD DPHA, manufactured by Nippon Kayaku Co., Ltd.), 21.2 g of 1,4-butanediol, and 0.30 g of dibutyltin dilaurate were charged into the reactor. A reaction was allowed to proceed at 80°C for 5 hr, 939.02 g of methyl ethyl ketone was added thereto, and the mixture was cooled. The resultant reaction product solution was analyzed by infrared absorption spectroscopy. As a result, it was confirmed that absorption attributable to an isocyanate group disappeared. Methyl ethyl ketone was removed from the reaction product solution by evaporation, and the softening point of the residue was measured and was found to be 42°C.

### Ionizing radiation curing composition C

Methyl ethyl ketone (256.67 g) and 110 g of a trimer of isophorone diisocyanate were charged into a reactor equipped with a stirrer, a reflux condenser, a dropping funnel, and a thermometer and were heated to 80°C for dissolution. After air was blown into the solution, 0.20 g of hydroquinone monomethyl ether, 146.65 g of a mixture composed of pentaerythritol tetraacrylate and pentaerythritol triacrylate, 30.08 g of epoxy acrylate (Epoxy Ester 70PA, manufactured by Kyoeisha Chemical Co., Ltd.), and 0.20 g of dibutyltin dilaurate were charged into the reactor. A reaction was allowed to proceed at 80°C for 5 hr, 412.37 g of methyl ethyl ketone was then added, and the mixture was cooled. The resultant reaction product solution was analyzed by infrared absorption spectroscopy. As a result, it was confirmed that absorption attributable to an isocyanate group disappeared. Methyl ethyl ketone was removed from the reaction product solution by evaporation, and the softening point of the residue was measured and was found to be 68°C.

### Ionizing radiation curing composition D

Methyl ethyl ketone (256.67 g) and 110 g of isophorone diisocyanate (VESTANAT IPDI, manufactured by Degussa) were charged into a reactor equipped with a stirrer, a reflux condenser, a dropping funnel, and a thermometer and were heated to 80°C for dissolution. After air was blown into the solution, 0.40 g of hydroquinone monomethyl ether, 448.53 g of a mixture composed of pentaerythritol tetraacrylate and pentaerythritol triacrylate, and 0.40 g of dibutyltin dilaurate were charged into the reactor. A reaction was allowed to proceed at 80°C for 5 hr, 1046.57 g of methyl ethyl ketone was then added, and the mixture was cooled. The resultant reaction product solution was analyzed by infrared absorption spectroscopy. As a result, it was confirmed that absorption attributable to an isocyanate group disappeared. Methyl ethyl ketone was removed from the reaction product solution by evaporation. As a result, the residue was a viscous liquid, and, thus, the softening temperature was immeasurable.

### Ionizing radiation curing composition E

A mixture composed of dipentaerythritol hexaacrylate and dipentaerythritol pentaacrylate (KAYARAD DPHA, manufactured by Nippon Kayaku Co., Ltd.) as such was used.

### (2) Preparation of film forming resin

The following three types of film forming resins were prepared.

### Resin a

A solution of 30 g of isobornyl methacrylate, 65 g of methyl methacrylate, and 5 g of glycidyl methacrylate dissolved in 200 g of toluene was heated in a reactor equipped with a stirrer, a reflux condenser, a dropping funnel, and a thermometer to 65°C. When the temperature reached 65°C, 0.5 g of 2,2'-azobis(2,4-dimethylvaleronitrile) was added to the solution. Further, two hr after the temperature reached 65°C, 0.5 g of 2,2'-azobis(2,4- dimethylvaleronitrile) was again added to the solution. A reaction was allowed to proceed at 65°C for additional 5 hr to give a copolymer. Thereafter, while blowing air into the solution, the temperature of the solution was intermittently raised to 108°C. Hydroquinone monomethyl ether (0.2 g) and 0.2 g of triphenylphosphine were added thereto, 2.5 g of acrylic acid was then added, and a reaction was allowed to proceed for 5 hr to give an acryloyl group-containing film forming resin a.

### Resin b

4-Hydroxyethyl methacrylate (5 g), 20 g of isobornyl methacrylate, 75 g of methyl methacrylate, 200 g of methyl ethyl ketone, and 0.5 g of 2,2'-azobis(2,4-dimethylvaleronitrile) were placed in a reactor equipped with a stirrer, a reflux condenser, a dropping funnel and a thermometer, followed by polymerization at 65°C for 6 hr. Thereafter, air was blown into the solution, and 0.2 g of hydroquinone monomethyl ether and 0.2 g of dibutyltin dilaurate were added thereto. An isocyanate group-containing acrylate (VI-1 manufactured by KAGAWA CHEMICAL LTD.) (10.7 g) was then added, the mixture was then heated to 80°C, and a reaction was allowed to proceed for 5 hr to give an acryloyl group-containing film forming resin b.

### Resin c

A commercially available product of a methacrylic ester resin (PARAPET GF, manufactured by Kuraray Co., Ltd.) as such was used.

### (3) Preparation of silicone compound

The following three types of silicone compounds were prepared.

### Silicone compound α

Methyl ethyl ketone (23.3 g), 10 g of isophorone diisocyanate, 20.4 g of a mixture composed of pentaerythritol tetraacrylate and pentaerythritol triacrylate, 0.10 g of dibutyltin dilaurate, and 0.10 g of hydroquinone monomethyl ether were charged into a reactor equipped with a stirrer, a reflux condenser, a dropping funnel, and a thermometer. Air was blown into the solution, and a reaction was then allowed to proceed at 25°C for 3 hr. Thereafter, while intermittently raising the temperature to 80°C, a reaction was allowed to proceed for 5 hr. An alcohol modified silicone (FMDA21, manufactured by Chisso Corp.) (240.8 g) was added to the reaction product, and a reaction was further allowed to proceed for 5 hr. Methyl ethyl ketone (609.3 g) was then added, and the mixture was cooled to give a silicone modified urethane acrylate containing an acryloyl group and a silicone (a silicone compound α).

### Silicone compound β

A solution of 10 g of 2-hydroxyethyl methacrylate, 40 g of styrene, 40 g of methacryl modified silicone (FM0711, manufactured by Chisso Corp.), and 2 g of laurylmercaptane, dissolved in 200 g of methyl ethyl ketone was heated in a reactor equipped with a stirrer, a reflux condenser, a dropping funnel, and a thermometer to 65°C. When the temperature reached 65°C, 0.6 g of 2,2'-azobis(2,4-dimethylvaleronitrile) was added to the solution. Further, two hr after the temperature reached 65°C, 0.6 g of 2,2'-azobis(2,4-dimethylvaleronitrile) was again added to the solution. A reaction was allowed to proceed at 65°C for additional 5 hr to give a copolymer. An adduct (79.3 g) prepared by reacting 22.2 g of isophorone diisocyanate with 57.1 g of a mixture composed of pentaerythritol triacrylate and pentaerythritol tetraacrylate at 25°C for 3 hr and then allowing a reaction to proceed for 5 hr while intermiettently raising the temperature to 80°C was added to the copolymer, and the mixture was allowed to react at 80°C for 5 hr to give a copolymer containing an acryloyl group and a silicone (a silicone compound β).

### Silicone compound γ

A commercially available product of a polyether modified silicone (SS-2803, manufactured by Nippon Unicar Co., Ltd.) as such was used.

### (4) Pretreatment of support

A neutral paper having a basis weight of 125 g/m² was provided as a support. A silica-containing acrylic resin having the following composition was bar coated as a covering material for a seal layer onto the support at a coverage of 5 g/m² on a dry basis. The coating was dried at 110°C for one min.

### [Acrylic resin]

| | |
|---|---|
| Styrene-acryl emulsion (X-436 manufactured by SEIKO POLYMER CORPORATION) | 25 pts.wt. |
| Water soluble acrylic resin (PDX-6102, manufactured by Johnson Polymer Corp.) | 25 pts.wt. |
| Silica (SYLYSIA 350, manufactured by Fuji Sylysia Chemical Ltd.) | 10 pts.wt. |
| Isopropyl alcohol | 25 pts.wt. |
| Water | 25 pts.wt. |

### (5) Preparation of coating liquid

The above ionizing radiation curing composition A (30 parts by weight), 60 parts by weight of a film forming resin b, and 10 parts by weight of a silicone compound α (the above "parts by weight" being parts by weight on a solid basis) were mixed together to prepare composition 1. A part of the composition was sampled, and the softening point thereof was measured and was found to be 76°C.

Compositions 2 to 9 were prepared by mixing according to the formulations (parts by weight on a solid basis) shown in Table 1 in the same manner as described above. Silica (SYLYSIA 350 manufactured by Fuji Sylysia Chemical Ltd.) was used as the inorganic pigment. A part of the composition was sampled, and the softening point thereof was measured. The results are also shown in Table 1.

**[Table 1]**

| Composition | Coating liquid (pts.wt. on solid basis) | | | | | | | | | | | | Softening temp. of coating liquid, °C |
|---|---|---|---|---|---|---|---|---|---|---|---|---|---|
| | Ionizing radiation curing composition | | | | | Resin | | | Silicone compound | | | Inorganic matter content | |
| | A | B | C | D | E | a | b | c | α | β | γ | | |
| 1 | 30 | - | - | - | - | - | 60 | - | - | 10 | - | - | 76 |
| 2 | - | - | 40 | - | - | - | - | 50 | 10 | - | - | - | 87 |
| 3 | - | 35 | - | - | - | 60 | - | - | - | - | 5 | - | 80 |
| 4 | - | - | 80 | - | - | - | 10 | - | 10 | | - | - | 75 |
| 5 | 60 | - | - | - | - | 30 | | - | - | - | 10 | - | 64 |
| 6 | 50 | - | - | - | - | - | - | 30 | - | 10 | - | 10 | 58 |
| 7 | - | - | - | - | 70 | - | 20 | - | 10 | - | - | - | 35 |
| 8 | - | - | - | 40 | - | - | - | 50 | 10 | - | - | - | 40 |
| 9 | - | - | - | - | 20 | - | - | 70 | - | - | 10 | - | 68 |

### (6) Preparation of release paper

A photopolymerization initiator (Irgacure 907 manufactured by Ciba Specialty Chemicals, K.K.) (3 parts by weight) and methyl ethyl ketone as a diluting solvent were added to composition 1 (100 parts by weight on a solid basis) so that the solid content was 30% by weight. The mixture thus obtained was bar coated onto a neutral paper not provided with a seal layer at a coverage of 5 to 10 g/m² on a dry basis, and the coating was heat dried at 110°C for one min.

Thereafter, the surface of the coating film was embossed. The embossing was carried out by pressing using a combination of a metal emboss roll having a concave-convex pattern and a paper roll as a backup roll with a female die.

For a particular part (3 mm x 3 mm) in this emboss roll, irregularities (concaves and convexes) were measured with a three-dimensional surface roughness tester (Surfcom 590A, manufactured by Tokyo Seimitsu Co., Ltd.). As a result, average height from center plane (Ra) was 12.99 µm, and ten-point mean roughness (Rz) was 65.78 µm.

In this case, the temperature of the emboss roll was brought to 120°C, and the support and the dried coating film were simultaneously embossed to satisfactorily emboss a part ranging from the dried coating film face to the backside of the support. It was confirmed that the concave-convex shape was satisfactorily provided in a part ranging from the coating face to the backside of the paper. Next, the coating film was irradiated with ultraviolet light from a high-pressure mercury lamp (output 120 W/cm) at 600 mj/cm² to cure the coating film. Thus, release paper 1 was prepared.

In the same manner as described above, each composition shown in the column of "1st layer" in Table 2 below was coated onto a support (a neutral paper provided or not provided with a seal layer) shown in Table 2, and the coating was dried. After drying, in the same manner as described above, each composition shown in the column of "2nd layer" in Table 2 was coated, and the coating was dried. Thereafter, the assembly was embossed in the same manner as described above.

### (7) Evaluation

For release papers 1 to 6 of the Examples of the present invention and release papers 7 to 9 of Comparative Examples, embossability, heat resistance, and separability were measured.

### <Embossability>

Concaves and convexes in the release paper with embosses corresponding to the emboss roll in its particular part being formed were measured with a three-dimensional surface roughness tester. The results were evaluated according to the following criteria.

| | |
|---|---|
| Ⓞ: | Both Ra and Rz values were not less than 85% relative to the values of the emboss roll. |
| ○: | Both Ra and Rz values were not less than 70% relative to the values of the emboss roll, and any one of the Ra and Rz values was not less than 85% relative to the value of the emboss roll. |
| Δ: | Both Ra and Rz values were not less than 70% and less than 85% relative to the values of the emboss roll. |
| X : | Any one of the Ra and Rz values was less than 70% relative to the value of the emboss roll. |

### < Production of PVC leather>

A vinyl chloride sol having the following composition was bar coated onto the surface of the release paper prepared above at a coverage of 100 g/m², and the coating was heat cured at 220°C for 3 min to form a leather sheet which was then separated from the release paper.

| | |
|---|---|
| Polyvinyl chloride (paste resin) | 100 pts.wt. |
| Dioctyl phthalate | 60 pts.wt. |
| Expanding agent (azodicarbonamide) | 3 pts.wt. |
| Antioxidant (KF-80A-8, manufactured by Kyodo Chemical Co., Ltd.) | 3 pts.wt. |
| Calcium carbonate | 10 pts.wt. |

### <Heat resistance>

The above procedure consisting of forming a leather sheet and separating the leather sheet from the release paper was repeated five times. Thereafter, the release paper was inspected for losing of the shape and a deterioration in support. The results were evaluated according to the following criteria.

| | |
|---|---|
| ○: | No losing of shape was observed at the time of the completion of the repetition of the procedure by five times. |
| Δ: | Due to losing of shape or surface change of the release paper, the release paper could not be used before the repetition of the procedure by five times. |
| X: | The procedure was carried out only once due to losing of shape or breaking caused by a deterioration in support. |

### <Cyclic separability>

One-component curing-type polyurethane having the following composition was bar coated onto the surface of the release paper prepared above at a coverage of 20 g/m² on a dry basis, and the coating was heat dried at 120°C for 2 min.

### [One-component curing-type polyurethane]

| | |
|---|---|
| Main agent (CRISVON, 7367SL, manufactured by Dainippon Ink and Chemicals, Inc.) | 100 pts.wt. |
| Color (DAILAC, TV-COLOR, manufactured by Dainippon Ink and Chemicals, Inc.) | 15 pts.wt. |
| Solvent (methyl ethyl ketone) | 30 pts.wt. |
| Solvent (dimethylformamide) | 10 pts.wt. |

Subsequently, a two-component curing-type urethane adhesive having the following composition was bar coated at a coverage of 20 g/m² on a dry basis, and buckskin was applied onto the coating, and the assembly was heated at 120°C for 2 min for heat curing the adhesive, followed by aging at 50°C for 24 hr to prepare a PU leather sheet.

### [Two-component curing-type urethane adhesive]

| | |
|---|---|
| Main agent (CRISVON, 4070, manufactured by Dainippon Ink and Chemicals, Inc.) | 100 pts.wt. |
| Curing agent (CRISVON, NX, manufactured by Dainippon Ink and Chemicals, Inc.) | 50 pts.wt. |
| Accelerating agent (CRISVON, ACCEL, HM manufactured by Dainippon Ink and Chemicals, Inc.) | 3 pts.wt. |
| Solvent (toluene) | 80 pts.wt. |
| Solvent (ethyl acetate) | 40 pts.wt. |

For the PU leather sheet thus obtained, 15 mm width of the leather sheet was separated by 180 degree from the release paper by a tensile tester (TENSILON RTC-1310A, manufactured by Orientec Co., Ltd.) at a rate of 300 mm/min to measure the peel strength. This procedure was repeated five times, and the separability was evaluated according to the following criteria.

| | |
|---|---|
| Ⓞ: | In the repetition of the procedure by five times, the peel strength was less than 1 N, and the separability substantially remained unchanged. |
| ○: | In the repetition of the procedure by five times, although the separation was possible, the peel strength was increased to not less than 1 N, that is, the separability was somewhat deteriorated. |
| Δ : | The separability was considerably deteriorated, and the separation became impossible before the fifth repetition of the procedure. |
| X : | In the first procedure, the leather sheet could not be successfully separated. |

The results were as shown in Table 2 below.

**[Table 2]**

| | Construction of release | | | | Evaluation | | |
|---|---|---|---|---|---|---|---|
| | Support | Seal layer | Coating layer | | Embossability | Heat resistance | (Cyclic) separation |
| | | | 1st layer | 2nd layer | | | |
| Example 1 | Neutralized paper | Not provided | Composition 1 | - | Δ | Δ | Δ |
| Example 2 | Neutralized paper | Not provided | Composition 5 | Composition 2 | ○ | Δ | ○ |
| Example 3 | Neutralized paper | Not provided | Composition 2 | Composition 4 | Δ | ○ | ○ |
| Example 4 | Neutralized paper | Not provided | Composition 6 | Composition 3 | Ⓞ | ○ | Δ |
| Example 5 | Neutralized paper | Provided | Composition 5 | Composition 4 | ○ | ○ | Ⓞ |
| Example 6 | Neutralized paper | Provided | Composition 1 | Composition 5 | ○ | Δ | Ⓞ |
| Comparative Example 1 | Neutralized paper | Provided | Composition 7 | Composition 8 | × | ○ | ○ |
| Comparative Example 2 | Neutralized paper | Provided | Composition 5 | Composition 7 | × | × | ○ |
| Comparative Example 3 | Neutralized paper | Provided | Composition 9 | Composition 6 | Δ | × | Δ |

As is apparent from the above table, for release papers 1 to 6 (Examples 1 to 6), all of the embossability, heat resistance, and cyclic separability were good. On the other hand, for release paper 7 (Comparative Example 1), the embossability was poor due to the low softening temperature of the coating material. For release paper 8 (Comparative Example 2), the embossability was poor. For release paper 9 (Comparative Example 3), the heat resistance was poor although the softening temperature of the coating material was high.

### 2. Synthetic leather produced by production process according to another aspect of the present invention

The above ionizing radiation curing composition A (30 parts by weight), 60 parts by weight of the film forming resin b, and 10 parts by weight of a silicone compound β (the above "parts by weight" being parts by weight on a solid basis) were mixed together to prepare composition 10. A part of the composition was sampled, and the softening temperature thereof was measured and was found to be 76°C.

In the same manner as described above, 80 parts by weight of the ionizing radiation curing composition C, 10 parts by weight of the film forming resin b, and 10 parts by weight of a silicone compound α (the above "parts by weight" being parts by weight on a solid basis) were mixed together to prepare composition 11. A part of the composition was sampled, and the softening temperature thereof was measured and was found to be 75°C.

### <Preparation of release paper>

A photopolymerization initiator (Irgacure 907, manufactured by Ciba Specialty Chemicals, K.K.) (3 parts by weight) and methyl ethyl ketone as a diluting solvent were added to composition 10 (100 parts by weight on a solid basis) so that the solid content was 30% by weight. The mixture thus obtained was bar coated onto a neutral paper not provided with a seal layer at a coverage of 5 to 10 g/m² on a dry basis, and the coating was heat dried at 110°C for one min.

Next, a photopolymerization initiator (Irgacure 907, manufactured by Ciba Specialty Chemicals, K.K.) (3 parts by weight) and methyl ethyl ketone as a diluting solvent were added to composition 11 (100 parts by weight on a solid basis) so that the solid content was 30% by weight. The mixture thus obtained was coated onto the coating film of composition 10 in the same manner as described above, and the coating was heat dried.

Thereafter, the surface of the coating film was embossed. The embossing was carried out by pressing using a combination of a metal emboss roll having a concave-convex pattern and a paper roll as a backup roll with a female die.

In this case, the temperature of the emboss roll was brought to 120°C, and the support and the dried coating film were simultaneously embossed to satisfactorily emboss a part ranging from the dried coating film face to the backside of the support. It was confirmed that the concave-convex shape was satisfactorily provided in a part ranging from the coating face to the backside of the paper. Next, the coating film was irradiated with ultraviolet light from a high-pressure mercury lamp (output 120 W/cm) at 600 mj/cm² to cure the coating film. Thus, a release paper was prepared.

### Example 7 (Production process of synthetic leather in first embodiment)

The following components were mixed together, and the mixture was thoroughly stirred in a propeller mixer to prepare an ester-type polyurethane resin composition in a mixture form as a coating liquid for skin layer formation.

### <Composition of ester-type polyurethane solution>

| | |
|---|---|
| Ester-type polyurethane resin (Crisvon NB-637N, manufactured by Dainippon Ink and Chemicals, Inc.) | 100 pts.wt. |
| Color (Dilac TV-COLOR, manufactured by Dainippon ink and Chemicals, Inc.) | 15 pts.wt. |
| Methyl ethyl ketone | 20 pts.wt. |
| Dimethylformamide | 10 pts.wt. |

The ester-type polyurethane solution thus obtained was coated by a knife coater onto the above release paper at a coverage of 20 µm on a dry basis, and the coating was dried by hot air at 100°C for 2 min to form a polyurethane skin layer. Next, a two-component curing-type polyester-type polyurethane adhesive 1 having the following composition was coated as an adhesive layer onto the polyurethane skin layer by a knife coater to a thickness of 40 µm on a dry basis, and a knitted fabric was applied thereto.

### <Composition of adhesive 1>

| | | |
|---|---|---|
| Main agent: | two-component curing-type ester-type polyurethane resin (Crisvon 4070, manufactured by Dainippon Ink and Chemicals, Inc.) | 100 pts.wt. |
| Curing agent: | curing agent for two-component curing-type urethane resin (Crisvon NX, manufactured by Dainippon Ink and Chemicals, Inc.) | 13 pts.wt. |
| Accelerating agent: | curing accelerating agent for two-component curing-type urethane resin (Crisvon Accel HM, manufactured by Dainippon Ink and Chemicals, Inc.) | 3 pts.wt. |
| Solvent: | methyl ethyl ketone | 30 pts.wt. |

The laminate was dried by hot air at 100°C for 5 min and was further aged for 48 hr to solidify the adhesive by a reaction, and the release paper was then separated to prepare a dry PU synthetic leather.

### Example 8 (Production process of synthetic leather in second embodiment)

The following components were mixed together, and the mixture was thoroughly stirred in a propeller mixer to prepare an ester-type polyurethane resin composition in a mixture form as a coating liquid for skin layer formation.

### <Composition of ester-type polyurethane solution>

| | |
|---|---|
| Ester-type polyurethane resin (Crisvon NB-637N, manufactured by Dainippon Ink and Chemicals, Inc.) | 100 pts.wt. |
| Color (Dilac TV-COLOR, manufactured by Dainippon ink and Chemicals, Inc.) | 15 pts.wt. |
| Methyl ethyl ketone | 20 pts.wt. |
| Dimethylformamide | 10 pts.wt. |

The ester-type polyurethane solution thus obtained was coated by a knife coater onto the above release paper at a coverage of 20 µm on a dry basis, and the coating was dried by hot air at 100°C for 2 min to form a polyurethane skin layer.

Next, a wet-type synthetic leather intermediate layer for intermediate layer formation was provided as follows. A coating liquid containing a resin for wet-type synthetic leather intermediate layer formation was prepared by mixing the following components and thoroughly stirring the mixture in a propeller mixer to prepare an ester-type polyurethane resin composition in a mixture form.

### <Coating liquid for wet-type synthetic leather intermediate layer formation>

| | |
|---|---|
| Polyurethane resin (Crisvon NB-637N, manufactured by Dainippon Ink and Chemicals, Inc.) | 100 pts.wt. |
| Color (Dilac TV-COLOR, manufactured by Dainippon ink and Chemicals, Inc.) | 1 pt.wt. |
| Film-forming aid (Crisvon Assistor SD-7, | |
| manufactured by Dainippon Ink and Chemicals, Inc.) | 160 pts.wt. |
| Dimethylformamide | 10 pts.wt. |

The above coating liquid was coated by a knife coater at a coverage of 700 g/m² onto a backing fabric of a 100% cotton loop yarn (tam yarn; count 2.4). The assembly was then immersed in a coagulating liquid (a 10% aqueous dimethylformamide solution) kept at 30°C for 5 min to form a film which was then washed in warm water of 60°C for 15 min until dimethylformamide was completely extracted. Thereafter, water was removed using a mangrove, and the assembly was dried in an oven of 120°C to prepare a wet-type synthetic leather intermediate layer.

The wet-type synthetic leather intermediate layer thus obtained and the skin layer were thermocompression bonded to each other by a hot roll using a hot laminator under conditions of temperature 180°C and nip pressure 4kg/m². Subsequently, the assembly was passed through a cooling roll and an air blow zone, and the release paper was separated to prepare a wet-type polyurethane synthetic leather.

### Example 9 (Production process of synthetic leather in third embodiment)

The following components were mixed together, and the mixture was thoroughly stirred in a propeller mixer to prepare a polyvinyl chloride resin composition in a mixture form (sol-like mixture) as a coating liquid for skin layer formation.

### <PVC resin composition>

| | |
|---|---|
| Emulsion polymerized polyvinyl chloride resin (average degree of polymerization 1000) | |
| (ZEST PX-QHP, manufactured by Shin Dai-Ichi Vinyl Corporation) | 20 pts.wt. |
| Plasticizer: dioctyl phthalate (DOT) | 80 pts.wt. |
| Stabilizer: barium-zinc-based composite stabilizer (ADEKA STAB LF-54, manufactured by Asahi Denka Kogyo Ltd.) | 3 pts.wt. |
| Filler: calcium carbonate | 5 pts.wt. |
| Pigment: titanium oxide | 3 pts.wt. |

The above sol-like mixture was coated onto the release paper to a thickness of 300 µm on a dry basis by a doctor knife, and the coating was dried by hot air at 150°C for 90 sec and at 195°C for 3.5 sec to form a PVC skin layer.

Next, a knitted fabric was applied onto the PVC skin layer, and the release paper was separated to prepare a PVC synthetic leather.

### Example 10 (Production process of synthetic leather in fourth embodiment)

The following components were mixed together, and the mixture was thoroughly stirred in a propeller mixer to prepare an ester-type polyurethane resin composition in a mixture form as a coating liquid for skin layer formation.

### <Composition of ester-type polyurethane solution>

| | |
|---|---|
| Ester-type polyurethane resin (Crisvon NB-637N, manufactured by Dainippon Ink and Chemicals, Inc.) | 100 pts.wt. |
| Color (Dilac TV-COLOR, manufactured by Dainippon ink and Chemicals, Inc.) | 15 pts.wt. |
| Methyl ethyl ketone | 20 pts.wt. |
| Dimethylformamide | 10 pts.wt. |

The ester-type polyurethane solution thus obtained was coated by a knife coater onto the above release paper at a coverage of 20 µm on a dry basis, and the coating was dried by hot air at 100°C for 2 min to form a polyurethane skin layer.

Next, a coating liquid for expanded PVC layer formation was prepared as follows. The following components were mixed together, and the mixture was thoroughly stirred in a propeller mixer to prepare an expandable PVC coating liquid.

### <Composition of expandable PVC coating liquid >

| | |
|---|---|
| Emulsion polymerized polyvinyl chloride resin (a resin prepared by copolymerizing epoxy group-containing monomer; average degree of polymerization 1500) | |
| (ZEST PF-821, manufactured by Shin Dai-Ichi Vinyl Corporation) | 20 pts.wt. |
| Plasticizer: dioctyl phthalate (DOT) | 80 pts.wt. |
| Expanding agent: azodicarbonamide (ADCA) | 3 pts.wt. |
| Stabilizer: barium-zinc-based composite stabilizer (ADEKA STAB LF-54, manufactured by Asahi Denka Kogyo Ltd.) | 3 pts.wt. |
| Filler: calcium carbonate | 5 pts.wt. |
| Pigment: titanium oxide | 3 pts.wt. |

The above expandable PVC coating liquid was coated onto the polyurethane skin layer to a thickness of 300 µm on a dry basis by a doctor knife, and the coating was dried by hot air at 150°C for 90 sec and at 195°C for 3.5 sec to form an expanded PVC layer.

Next, a kitted fabric was applied onto the expanded PVC layer, and the release paper was separated to prepare a semi-synthetic leather.

### <Evaluation>

In the same manner as described above, the production of a synthetic leather was repeated five times using an identical release paper to evaluate losing of the shape, a deterioration in support, and separability of the release paper.
Losing of the shape of the release paper as an embossing die was evaluated according to the following criteria.

| | |
|---|---|
| ○: | No losing of shape was observed in the embossing die after the repetition of the production by five times. |
| Δ : | Due to collapse of embossing die or surface change of the release paper, the use of the release paper became impossible before the repetition of the production by five times. |
| X : | The production could be carried out only once due to collapse of embossing die or breaking caused by deterioration in support. |

Regarding the separability of the release paper, 15 mm width of the synthetic leather was separated by 180 degrees from the release paper by a tensile tester (TENSILON RTC-1310A, manufactured by Orientec Co., Ltd.) at a rate of 300 mm/min to measure the peel strength. In the same manner as in the above Example, synthetic leathers were repeatedly produced five times using an identical release paper to evaluate the separability of the release paper from the synthetic leather.

| | |
|---|---|
| ⊚ : | Even after the repetition of the production by five times, the peel strength was less than 1 N, and the separability substantially remained unchanged. |
| ○ : | Although the release paper could be repeatedly used five times, the peel strength was increased to not less than 1 N, that is, the separability was somewhat deteriorated. |
| Δ : | After the repeated use of the release paper by five times, the separability was considerably deteriorated, and the separation became impossible before the fifth repetition of the production. |
| X : | In the first production, the release paper could not be successfully separated. |

The results were as shown in Table 3 below.

**[Table 3]**

| | State of release paper | | Separability |
|---|---|---|---|
| | Collapse of embossing die | Change in support | |
| Example 7 | ○ | No change observed | ⊚ |
| Example 8 | ○ | No change observed | ⊚ |
| Example 9 | ○ | No change observed | ⊚ |
| Example 10 | ○ | No change observed | ⊚ |

### 3. Embossed release paper according to still another aspect of the present invention

### Example 11

Regarding a resin for constituting a skin layer in a synthetic leather, the following materials were weighed and mixed together to prepare an ester-type polyurethane solution.

### <Composition of ester-type polyurethane solution>

| | |
|---|---|
| Ester-type polyurethane resin (Crisvon NB-637N, manufactured by Dainippon Ink and Chemicals, Inc.) | 100 pts.wt. |
| Color (Dilac TV-COLOR, manufactured by Dainippon ink and Chemicals, Inc.) | 15 pts.wt. |
| Methyl ethyl ketone | 20 pts.wt. |
| Dimethylformamide | 10 pts.wt. |

The ester-type polyurethane solution thus obtained was coated by a knife coater onto the release paper used in Example 7 at a coverage of 20 µm on a dry basis, and the coating was dried by hot air at 100°C for 2 min to form a polyurethane skin layer. Next, a two-component curing-type polyester-type polyurethane adhesive 1 having the following composition was coated as an adhesive layer onto the polyurethane skin layer by a knife coater to a thickness of 40 µm on a dry basis, and a knitted fabric was applied thereto.

### <Composition of adhesive 1>

| | | |
|---|---|---|
| Main agent: | two-component curing-type ester-type polyurethane resin (Crisvon 4070, manufactured by Dainippon Ink and Chemicals, Inc.) | 100 pts.wt. |
| Curing agent: | curing agent for two-component curing-type urethane resin (Crisvon NX, manufactured by Dainippon Ink and Chemicals, Inc.) | 13 pts.wt. |
| Accelerating agent: | curing accelerating agent for two-component curing-type urethane resin (Crisvon Accel HM, manufactured by Dainippon Ink and Chemicals, Inc.) | 3 pts.wt. |
| Solvent: | methyl ethyl ketone | 30 pts.wt. |

The laminate was dried by hot air at 100°C for 5 min and was further aged for 48 hr to solidify the adhesive by a reaction. Thereafter, in order to evaluate the suitability of the release paper for repeated use, in the separation of the release paper to produce a dry-type PU synthetic leather, (1) peel strength between the release paper and the synthetic leather and (2) the proportion of silicone present on the surface of the release paper and the surface of the synthetic leather after the separation were measured. The above procedure was repeated five times to confirm a change in peel strength and the proportion of silicone on surface by the repeated use of the release paper.

### Example 12

The production and evaluation of a synthetic leather were carried out in the same manner as in Example 11, except that the preparation of adhesive 1 in Example 1 was changed as follows.

### <Composition of adhesive 2>

| | | |
|---|---|---|
| Main agent: | two-component reaction-type ester-type polyurethane resin (Crisvon TA-265, manufactured by Dainippon Ink and Chemicals, Inc.) | 100 pts.wt. |
| Curing agent: | curing agent for two-component curing-type urethane resin (Crisvon NX, manufactured by Dainippon Ink and Chemicals, Inc.) | 13 pts.wt. |
| Accelerating agent: | curing accelerating agent for two-component curing-type urethane resin (Crisvon Accel HM, manufactured by Dainippon Ink and Chemicals, Inc.) | 3 pts.wt. |
| Solvent: | toluene/ethyl acetate (1/1) | 25 pts.wt. |

### Example 13

The production and evaluation of a synthetic leather were carried out in the same manner as in Example 11, except that the preparation of adhesive 1 in Example 11 was changed as follows.

### <Composition of adhesive 3>

| | | |
|---|---|---|
| Main agent: | two-component curing-type ester-type polyurethane resin (Crisvon TA-205, manufactured by Dainippon Ink and Chemicals, Inc.) | 100 pts.wt. |
| Curing agent: | curing agent for two-component curing-type urethane resin (Crisvon NX, manufactured by Dainippon Ink and Chemicals, Inc.) | 13 pts.wt. |
| Accelerating agent: | curing accelerating agent for two-component curing-type urethane resin (Crisvon Accel HM, manufactured byDainippon Ink and Chemicals, Inc.) | 3 pts.wt. |
| Solvent: | toluene/ethyl acetate (1/1) | 30 pts.wt. |

### <Cyclic separability>

Regarding the separability of the release paper in separating the release paper from the produced synthetic leather, 15 mm width of the synthetic leather was separated by 180 degrees from the release paper by a tensile tester (TENSILON RTC-1310A, manufactured by Orientec Co., Ltd.) at a rate of 300 mm/min to measure the peel strength. In the same manner as in the above Example, synthetic leathers were repeatedly produced using an identical release paper to evaluate the separability of the release paper from the synthetic leather. The results were as shown in Table 4.

**[Table 4]**

| | Cyclic peel strength, gf/15 mm-width | | | | |
|---|---|---|---|---|---|
| | 1st | 2nd | 3rd | 4th | 5th |
| Example 11 | 10 | 7 | 17 | 28 | 45 |
| Example 12 | 18 | 7 | 13 | 30 | 25 |
| Example 13 | 15 | 5 | 15 | 24 | 35 |

### <Proportion of silicone-derived silicon present on surface>

The proportion of silicone-derived silicon present on surface was measured for the release paper before synthetic leather production, and the synthetic leather produced as described above using the release paper. The measurement was carried out as follows.

At the outset, an X-ray photoelectron spectroscopic device (XPS, name of device: ESCALAB220i-XL (manufactured by Thermo VG Scientific)) was provided as a surface analyzer. The release paper and the synthetic leather were cut at an arbitrary position into a size of 1 cm square. Each specimen was set in a stage, followed by vacuum drawing for pretreatment.

A non-monochromated Al-Kα radiation was used (power 300 W) as the X-ray. The sample was set at a photoelectron uptake angle of 90 degrees, and the surface of the release paper and the surface of the synthetic leather were analyzed for silicon to determine the amount of silicone-derived silicon present on the surface. Background processing of the measurement results was carried out by the Shirley method. Further, in the same manner as described above, synthetic leathers were repeatedly produced using an identical release paper. In the production of each synthetic leather, the release paper was separated from the synthetic leather, and the amount of silicon present on surface was determined for the synthetic leather and the release paper. The results were as shown in Table 5 below.

**[Table 5]**

| | Measuring site | Proportion of silicone-derived silicon present on surface, % | | | | |
|---|---|---|---|---|---|---|
| | | Before evaluation | 1st | 2nd | 3rd | 4th |
| Example 11 | Release paper | 19.7 | 11.8 | 10.8 | 8.4 | 6.3 |
| | Synthetic leather | - | 11.0 | 9.9 | 8.0 | 5.9 |
| Example 12 | Release paper | 19.7 | 14.3 | 12.5 | 8.9 | 6.2 |
| | Synthetic leathe**r** | - | 14.0 | 11.6 | 7.9 | 6.0 |
| Example 13 | Release paper | 19.7 | 12.3 | 10.9 | 9.8 | 7.3 |
| | Synthetic leather | - | 11.9 | 10.1 | 9.1 | 7.0 |

### 4. Support according to the present invention

### Example 14

To a pulp slurry containing a bleached kraft pulp comprising a mixture composed of an L material and an N material (L material : N material = 80% : 20%) was added an alkylketene dimer as a neutral sizing agent in an amount of 0.1% based on the amount of the pulp. A base paper having a basis weight of 140 g/m² was made from this slurry with a Fourdrinier-tanmo combinational multicylindrical machine. In continuation to the step of papermaking, a clay coating layer was formed on the base paper at a coverage of 9 g/m² by an air knife coater. The assembly was then passed through a calendar roll to impart smoothness. Thus, a base paper having a clay coating layer was prepared.

For the base paper having a clay coating layer as prepared above, the surface smoothness was measured with a digital Bekk smoothness tester manufactured by manufactured by Toyo Seiki by the measuring method specified in JIS P 8119. Further, the tensile strength was measured with Tensilon RTC-1310A manufactured by Orientec Co., Ltd. by the testing method specified in JIS P 8113, and the tear strength was measured with an Elemendorf tearing tester manufactured by Tester Sangyo Co., Ltd. by the testing method specified in JIS P 8116 under the following conditions.

| | |
|---|---|
| Condition (1): | measured under room temperature (23°C, 50%RH) |
| Condition (2): | measured after standing at 230°C for 3 min (oven device: MUFFLE FURANCE FP-31 manufactured by YAMATO SCIENTIFIC CO., LTD.) |

The results were as shown in Table 6 below.

As is also apparent from Table 6, the smoothness was 153.8 sec, and, regarding the tensile strength and the tear strength, also in condition (2), the tensile strength (kN/m) in the machine direction was 13.4 kN/m, that is, was not less than 10 kN/m, and the tear strength (mN) was 627 mN in machine direction and was 627 mN in cross direction, that is, was not less than 500 mN in both the machine direction and cross direction.

A coating liquid was coated onto the base paper having a clay coating layer thus obtained to prepare a coated base material. The coating liquid was prepared by adding a reaction initiator (Irgacure 907, manufactured by Ciba Specialty Chemicals, K.K.), to an ultraviolet curing resin (composition 1 used in Example 1), in an amount of 3% by weight based on the resin solid content and dissolving the mixture in methyl ethyl ketone. The coating liquid was coated onto the clay coating layer by a reverse coater at a coverage of 10 g/m² on a dry basis after the removal of the solvent by evaporation, and the coating was then dried to evaporate the solvent to prepare a coated base material having an ultraviolet curing resin layer.

The coated base material was passed through a planished calendar roll (manufactured by YURI ROLL CO., LTD.) to transfer a specular surface of the calendar roll to the surface of the ultraviolet curing resin layer for evaluation of the transferability. Specifically, the coated base material was disposed so that the surface of a calendar roll of 110°C came into contact with the surface of the ultraviolet curing resin in the coated base material. Further, a linear pressure of 100 kN/m was applied between the impression cylinder and the calendar roll for the transfer. Thereafter, the transferred face was irradiated with ultraviolet light (600 mJ/cm²) from a high-pressure mercury lamp (power 120 W/cm) to solidify the ultraviolet curing resin.

For the base material for evaluation thus obtained, the 60-degree specular gloss (Gs (60°)) of the transferred face was measured with a digital varied angle photometer (manufactured by Suga Test Instruments Co., Ltd.) for the evaluation of the transferability.

The results were as shown in Table 7. As is also apparent from Table 7, Gs (60°) was 74%, indicating that the transferability was good. The transferability was evaluated according to the following criteria.
Gs (60°) ≥ 80%: very good (⊚)
80% > Gs (60°) ≥ 70%: good (○)
70% > Gs (60°) ≥ 60%: poor (Δ)
60% > Gs (60°): very poor, and unusable (x)

A test on the repetition of the production of polyvinyl chloride synthetic leather was carried out using the above base material for evaluation to determine the number of times of use of the identical base material for the evaluation of heat resistance. Evaluation criteria were as follows.
The base material for evaluation could be repeatedly used by five times or more without breaking: good heat resistance (○)
The number of times of repetition of use of the base material for evaluation without breaking was less than 5 times: poor heat resistance (x)
The results were as shown in Table 7. As is also apparent from the results, the above base material for evaluation had heat resistance high enough to withstand the repetition of use of five or more times.

### Example 15

To a pulp slurry containing a bleached kraft pulp comprising a mixture composed of an L material and an N material (L material : N material = 80% : 20%) was added an alkylketene dimer as a neutral sizing agent in an amount of 0.1% based on the amount of the pulp. A base paper having a basis weight of 140 g/m² was made from this slurry with a Fourdrinier-tanmo combinational multicylindrical machine. In continuation to the step of papermaking, a clay coating layer was formed on the base paper at a coverage of 18 g/m² by a blade coater and an air knife coater. The assembly was then passed through a calendar roll to impart smoothness. Thus, a base paper having a clay coating layer was prepared.

The base paper having a clay coating layer thus prepared was evaluated in the same manner as in Example 14.

The results were as shown in Table 6. As is also apparent from Table 6, the smoothness was high and 462.3 sec. Further, regarding the tensile strength and the tear strength, also in condition (2), the tensile strength (kN/m) in the machine direction was 12.8 kN/m, that is, was not less than 10 kN/m, and the tear strength (mN) was 638 mN in machine direction and was 578 mN in cross direction, that is, was not less than 500 mN in both the machine direction and cross direction.

A base material for evaluation was formed in the same manner as in Example 14, except that the base paper having a clay coat layer thus prepared was used.

For the base material for evaluation thus obtained, the 60-degree specular gloss (Gs (60°)) of the transferred face was measured in the same manner as in Example 14. Further, for the base material for evaluation, the transferability and the heat resistance were evaluated in the same manner as in Example 14.

The results were as shown in Table 7. As is also apparent from Table 7, Gs (60°) was 83%, indicating that the transferability was good. Further, the base material for evaluation had heat resistance high enough to withstand the repetition of use of five times or more.

### Comparative Example 4

To a pulp slurry containing a bleached kraft pulp comprising a mixture composed of an L material and an N material (L material : N material = 80% : 20%) was added an alkylketene dimer as a neutral sizing agent in an amount of 0.1% based on the amount of the pulp. A base paper having a basis weight of 140 g/m² was made from this slurry with a Fourdrinier-tanmo combinational multicylindrical machine. Thus, a clay coating layer-free base paper was prepared.

For the clay coating layer-free base paper thus prepared, the surface smoothness, tensile strength, and tear strength were measured in the same manner as in Example 14.

The results were as shown in Table 6. As is also apparent from Table 6, the smoothness was low and 77.2 sec. Further, regarding the tensile strength and the tear strength, also in condition (2), the tensile strength (kN/m) in the machine direction was 14.0 kN/m, that is, was not less than 10 kN/m, and the tear strength (mN) was 655 mN in machine direction and was 605 mN in cross direction, that is, was not less than 500 mN in both the machine direction and cross direction.

A base material for evaluation was formed in the same manner as in Example 14, except that the clay coating layer-free base paper thus prepared was used.

For the base material for evaluation thus obtained, the 60-degree specular gloss (Gs (60°)) of the transferred face was measured in the same manner as in Example 14. Further, for the base material for evaluation, the transferability and the heat resistance were evaluated in the same manner as in Example 14.

The results were as shown in Table 7. As is also apparent from Table 7, Gs (60°) was low and 52%, indicating that the transferability was very poor and the base material was unusable.

### Comparative Example 5

To a pulp slurry containing a bleached kraft pulp comprising a mixture composed of an L material and an N material (L material : N material = 80% : 20%) were added a rosin-based sizing agent and aluminum sulfate as a fixing agent. A base paper having a basis weight of 140 g/m² was made from this slurry with a Fourdrinier-tanmo combinational multicylindrical machine. In continuation to the step of papermaking, a clay coating layer was formed on the base paper at a coverage of 9 g/m² by an air knife coater. The assembly was then passed through a calendar roll to impart smoothness. Thus, a base paper having a clay coating layer was prepared.

The base paper having a clay coating layer thus prepared was evaluated in the same manner as in Example 14.

The results were as shown in Table 6. As is also apparent from Table 6, the smoothness was low and 77.2 sec. Further, regarding the tensile strength and the tear strength, in condition (2), the tensile strength (kN/m) in the machine direction was 4.2 kN/m, that is, was less than 10 kN/m, and the tear strength (mN) was 158 mN in machine direction and was 125 mN in cross direction, that is, was less than 500 mN in both the machine direction and cross direction.

A base material for evaluation was formed in the same manner as in Example 14, except that the base paper thus prepared having a clay coating layer was used.

For the base material for evaluation thus obtained, the 60-degree specular gloss (Gs (60°)) of the transferred face was measured in the same manner as in Example 14. Further, for the base material for evaluation, the transferability and the heat resistance were evaluated in the same manner as in Example 14.

The results were as shown in Table 7. As is also apparent from Table 7, Gs (60°) was high and 73%, indicating that the transferability was good. However, breaking occurred in the second transfer, indicating that the heat resistance was so low that the practical value of the base material was low.

**[Table 6]**

| | Smoothness, sec | Conditions | Tensile strength, kN/m | | Tear strength, mN | |
|---|---|---|---|---|---|---|
| | | | Machine direction | Cross direction | Machine direction | Cross direction |
| Example 14 | 153.8 | (1) | 13.4 | 7.9 | 1400 | 1315 |
| | | (2) | 13.2 | 7.7 | 627 | 627 |
| Example 15 | 462.8 | (1) | 13.0 | 7.3 | 1250 | 1177 |
| | | (2) | 12.8 | 7.0 | 638 | 578 |
| Comparative Example 4 | 77.2 | (1) | 14.1 | 8.0 | 1470 | 1424 |
| | | (2) | 14.0 | 7.7 | 655 | 605 |
| Comparative Example 5 | 150.1 | (1) | 13.7 | 7.7 | 1382 | 1305 |
| | | (2) | 4.2 | 2.6 | 158 | 125 |

**[Table 7]**

| | Transferability | | Heat resistance | |
|---|---|---|---|---|
| | Gs (60°) | Evaluation | Number of times of use | Evaluation |
| Example 14 | 74% | ○ | Not less than 5 times | ○ |
| Example 15 | 83% | ⊚ | Not less than 5 times | ○ |
| Comparative Example 4 | 52% | × | Not less than 5 times | ○ |
| Comparative Example 5 | 73% | ○ | Once | × |

## Claims

1. An embossed release paper for synthetic leather production, comprising at least paper as a support and an ionizing radiation cured film provided on the paper, the upper part of the cured film having been embossed, **characterized in that**
the ionizing radiation cured film has been formed by applying an ionizing radiation to a coating liquid comprising at least an ionizing radiation curing composition having a softening point of 40°C or above, to cure the ionizing radiation curing composition, the ionizing radiation curing composition comprising
a product of a reaction of an isocyanate compound with an (meth)acrylic compound containing an (meth)acryloyl group and reactive with the isocyanate compound, or
a product of a reaction of an isocyanate compound with an (meth)acrylic compound containing an (meth)acryloyl group and reactive with the isocyanate compound, and a compound free from an (meth)acryloyl group and reactive with an isocyanate group.

2. The embossed release paper according to claim 1, wherein the ionizing radiation cured film further comprises 1 to 70% by weight of a film forming resin.

3. The embossed release paper according to claim 1 or 2, wherein the ionizing radiation cured film further comprises 0.5 to 20% by weight of a silicone compound.

4. The embossed release paper according to any one of claims 1 to 3, wherein a seal layer comprising an inorganic pigment and a film forming resin is provided on the surface of the support.

5. The embossed release paper according to any one of claims 1 to 4, wherein the ionizing radiation cured film has a multilayer structure of at least two layers.

6. The embossed release paper according to claim 5, wherein, in the ionizing radiation cured film having a multilayer structure of at least two layers, 0.5 to 50% by weight of an inorganic pigment is contained in one or at least two layers.

7. The embossed release paper according to claim 5 or 6, wherein, in the ionizing radiation cured film having a multilayer structure of at least two layers, 0.5 to 50% by weight of an inorganic pigment is contained in the lowermost layer provided on the support side.

8. The embossed release paper according to any one of claims 5 to 7, wherein, in the ionizing radiation cured film having a multilayer structure of at least two layers, 0.5 to 20% by weight of a silicone compound is contained in one or at least two layers.

9. The embossed release paper according to any one of claims 5 to 8, wherein, in the ionizing radiation cured film having a multilayer structure of at least two layers, 0.5 to 20% by weight of a silicone compound is contained in the uppermost layer provided on the side remote from the support.

10. The embossed release paper according to any one of claims 5 to 9, wherein, in the ionizing radiation cured film having a multilayer structure of two or more layers,
0.5 to 50% by weight of an inorganic pigment is contained in the lowermost layer provided on the support side, and
0.5 to 20% by weight of a silicone compound is contained in the uppermost layer provided on the side remote from the support.

11. The embossed release paper according to any one of claims 5 to 9, wherein, in the ionizing radiation cured film having a multilayer structure of two or more layers,
0.5 to 50% by weight of an inorganic pigment is contained in the lowermost layer provided on the support side, and
0.5 to 20% by weight of a silicone compound is contained in each layer.

12. The embossed release paper according to any one of claims 1 to 11, wherein the paper as the support is neutral paper.

13. The embossed release paper according to any one of claims 1 to 12, wherein the paper as the support has been embossed.

14. The embossed release paper according to claim 3, wherein the proportion of silicone-derived silicon present on the surface of the ionizing radiation cured film is 5 to 30%, and the proportion of silicone-derived silicon present on the surface of the ionizing radiation cured film after the repetition of the production of a synthetic leather using the release paper by 5 times is not less than 5%.

15. A process for producing an embossed release paper according to any one of claims 1 to 14, **characterized by** comprising the steps of:
coating a coating liquid onto a surface of a support at a coverage of 1 to 40 g/m² on a dry basis to form a coating film;
vaporizing the solvent from the coating film to dry the coating film;
embossing either the dried coating film or the support and the dried coating film simultaneously; and
applying an ionizing radiation to the coating film to form an ionizing radiation cured film,
the coating liquid comprising at least an ionizing radiation curing composition having a softening point of 40°C or above, the ionizing radiation curing composition comprising
a product of a reaction of an isocyanate compound with an (meth)acrylic compound containing an (meth)acryloyl group and reactive with the isocyanate compound, or
a product of a reaction of an isocyanate compound with an (meth)acrylic compound containing an (meth)acryloyl group and reactive with the isocyanate compound, and a compound free from an (meth)acryloyl group and reactive with an isocyanate group,
the coating liquid having been diluted with 10 to 1000 parts by weight of the solvent based on 100 parts by weight on a solid basis of the coating liquid.

16. A process for producing a synthetic leather using the embossed release paper according to any one of claims 1 to 14, **characterized by** comprising the steps of:
coating a polyurethane resin composition onto the embossed ionizing radiation cured film and heat drying the coating to form a skin layer;
laminating a backing fabric onto the skin layer through an adhesive to form a synthetic leather layer; and
separating the release paper from the synthetic leather layer.

17. The process according to claim 16, wherein the adhesive is a two-pack curing type polyurethane resin.

18. The process according to claim 16, wherein, in the step of laminating the backing fabric, after an adhesive is coated onto the skin layer to form a coating which is then dried, a backing fabric is laminated onto the adhesive by hot lamination.

19. A process for producing a synthetic leather using an embossed release paper according to any one of claims 1 to 14, **characterized by** comprising the steps of:
coating a polyurethane resin composition onto the embossed ionizing radiation cured film and heat drying the coating to form a skin layer;
laminating a wet intermediate layer onto the skin layer and contact bonding the skin layer to the wet intermediate layer by a hot roll from the release paper side to form a synthetic leather layer; and
cooling the synthetic leather layer and then separating the release paper.

20. A process for producing a synthetic leather using an embossed release paper according to any one of claims 1 to 14, **characterized by** comprising the steps of:
coating a vinyl chloride resin composition onto the embossed ionizing radiation cured film and heat drying the coating to form a skin layer;
coating an expandable vinyl chloride resin composition onto the skin layer and heating the coating to form an intermediate layer;
laminating a backing fabric onto the intermediate layer through an adhesive to form a synthetic leather layer; and
separating the release paper from the synthetic leather layer.

21. A process for producing a synthetic leather using an embossed release paper according to any one of claims 1 to 14, **characterized by** comprising the steps of:
coating a polyurethane resin composition onto the embossed ionizing radiation cured film and heat drying the coating to form a skin layer;
coating an expandable vinyl chloride resin composition onto the skin layer and heating the coating to form an intermediate layer;
laminating a backing fabric onto the intermediate layer through an adhesive to form a synthetic leather layer; and
separating the release paper from the synthetic leather layer.

22. A process for producing a synthetic leather using an embossed release paper according to any one of claims 1 to 14, **characterized by** comprising the steps of:
coating a polyurethane resin composition onto the embossed ionizing radiation cured film and heat drying the coating to form a skin layer;
coating an expandable vinyl chloride resin composition onto the skin layer and heating the coating to form an intermediate layer;
laminating a backing fabric onto the intermediate layer through an adhesive to form a synthetic leather layer; and
separating the release paper from the synthetic leather layer.

23. A synthetic leather **characterized by** being produced by using an embossed release paper according to claim 14, the proportion of silicone-derived silicon present on the synthetic leather in its separated surface obtained by separating the release paper being not more than 20%.

24. The synthetic leather according to claim 23, wherein the release paper has been used a plurality of times.

25. A synthetic leather produced by a process according to any one of claims 17 to 22

26. The embossed release paper according to any one of claims 1 to 14, wherein the support comprises a base paper having a clay coating layer on its one side, **characterized in that**
the base paper has such a heat resistance that the tensile strength as measured after standing at 230°C for 3 min by the measuring method specified in JIS P 8113 is maintained at not less than 10 kN/m at least in the machine direction and the tear strength as measured after standing at 230°C for 3 min by the measuring method specified in JIS P 8116 is maintained at not less than 500 mN in both the machine direction and cross direction, and
the clay coat layer has a smoothness of not less than 100 sec as measured by the measuring method specified in JIS P 8119 and has been formed so that surface irregularities derived from pulp fibers constituting the base paper are absorbed, wherein the base paper is a mental base paper and has been made by using a mixed pulp composed of a hardwood pulp and a softwood pulp and the content of the hardwood pulp in the mixed pulp is 50 to 90%.

27. The embossed release paper according to claim 26, wherein the mental base paper is sized with an alkylketene dimer.

28. The embossed release paper according to claim 26 or 27, wherein the mental base paper has a basis weight of 100 to 200 g/m².

29. The embossed release paper according to any one of claims 26 to 28, wherein the clay coat layer has a coverage of 5 to 40 g/m².

## Patentansprüche

1. Geprägtes Trennpapier zur Kunstlederherstellung, umfassend mindestens Papier als einen Träger und eine auf dem Papier bereitgestellte, durch ionisierende Strahlung gehärtete Schicht, wobei der obere Teil der gehärteten Schicht geprägt wurde, **dadurch gekennzeichnet, dass**
die durch ionisierende Strahlung gehärtete Schicht durch das Anwenden einer ionisierenden Strahlung auf eine Beschichtungsflüssigkeit, umfassend mindestens eine durch ionisierende Strahlung härtbare Zusammensetzung mit einem Erweichungspunkt von 40°C oder höher, um die durch ionisierende Strahlung härtbare Zusammensetzung zu härten, hergestellt wurde, wobei die durch ionisierende Strahlung härtbare Zusammensetzung
ein Produkt einer Umsetzung einer Isocyanatverbindung mit einer (Meth)acrylverbindung, enthaltend eine (Meth)acryloylgruppe, und welche mit der Isocyanatverbindung reaktionsfähig ist, oder
ein Produkt einer Umsetzung einer Isocyanatverbindung mit einer (Meth)acrylverbindung, enthaltend eine (Meth)acryloylgruppe, und welche mit der Isocyanatverbindung reaktionsfähig ist, und einer Verbindung frei von einer (Meth)acryloylgruppe und welche mit einer Isocyanatgruppe reaktionsfähig ist, umfasst.

2. Geprägtes Trennpapier nach Anspruch 1, wobei die durch ionisierende Strahlung gehärtete Schicht ferner 1 bis 70 Gew.-% eines schichtbildenden Harzes umfasst.

3. Geprägtes Trennpapier nach Anspruch 1 oder 2, wobei die durch ionisierende Strahlung gehärtete Schicht ferner 0,5 bis 20 Gew.-% einer Silikonverbindung umfasst.

4. Geprägtes Trennpapier nach einem der Ansprüche 1 bis 3, wobei eine Dichtungsschicht, umfassend ein anorganisches Pigment und ein schichtbildendes Harz, auf der Oberfläche des Trägers bereitgestellt ist.

5. Geprägtes Trennpapier nach einem der Ansprüche 1 bis 4, wobei die durch ionisierende Strahlung gehärtete Schicht eine Mehrschichtstruktur von mindestens zwei Schichten aufweist.

6. Geprägtes Trennpapier nach Anspruch 5, wobei in der durch ionisierende Strahlung gehärteten Schicht mit einer Mehrschichtstruktur von mindestens zwei Schichten 0,5 bis 50 Gew.-% eines anorganischen Pigments in einer oder mindestens zwei Schichten enthalten sind.

7. Geprägtes Trennpapier nach Anspruch 5 oder 6, wobei in der durch ionisierende Strahlung gehärteten Schicht mit einer Mehrschichtstruktur von mindestens zwei Schichten 0,5 bis 50 Gew.-% eines anorganischen Pigments in der untersten Schicht, die auf der Trägerseite bereitgestellt ist, enthalten sind.

8. Geprägtes Trennpapier nach einem der Ansprüche 5 bis 7, wobei in der durch ionisierende Strahlung gehärteten Schicht mit einer Mehrschichtstruktur von mindestens zwei Schichten 0,5 bis 20 Gew.-% einer Silikonverbindung in einer oder mindestens zwei Schichten enthalten sind.

9. Geprägtes Trennpapier nach einem der Ansprüche 5 bis 8, wobei in der durch ionisierende Strahlung gehärteten Schicht mit einer Mehrschichtstruktur von mindestens zwei Schichten 0,5 bis 20 Gew.-% einer Silikonverbindung in der obersten Schicht, die auf der von dem Träger entfernten Seite bereitgestellt ist, enthalten sind.

10. Geprägtes Trennpapier nach einem der Ansprüche 5 bis 9, wobei in der durch ionisierende Strahlung gehärteten Schicht mit einer Mehrschichtstruktur von zwei oder mehr Schichten
0,5 bis 50 Gew.-% eines anorganischen Pigments in der untersten Schicht, die auf der Trägerseite bereitgestellt ist, enthalten sind und
0,5 bis 20 Gew.-% einer Silikonverbindung in der obersten Schicht, die auf der von dem Träger entfernten Seite bereitgestellt ist, enthalten sind.

11. Geprägtes Trennpapier nach einem der Ansprüche 5 bis 9, wobei in der durch ionisierende Strahlung gehärteten Schicht mit einer Mehrschichtstruktur von zwei oder mehr Schichten
0,5 bis 50 Gew.-% eines anorganischen Pigments in der untersten Schicht, die auf der Trägerseite bereitgestellt ist, enthalten sind und
0,5 bis 20 Gew.-% einer Silikonverbindung in jeder Schicht enthalten sind.

12. Geprägtes Trennpapier nach einem der Ansprüche 1 bis 11, wobei das Papier als der Träger neutrales Papier ist.

13. Geprägtes Trennpapier nach einem der Ansprüche 1 bis 12, wobei das Papier als der Träger geprägt wurde.

14. Geprägtes Trennpapier nach Anspruch 3, wobei der Anteil an von Silikon stammendem Silicium, das an der Oberfläche der durch ionisierende Strahlung gehärteten Schicht vorliegt, 5 bis 30% beträgt, und der Anteil an von Silikon stammendem Silicium, das an der Oberfläche der durch ionisierende Strahlung gehärteten Schicht nach der Wiederholung der Herstellung eines Kunstleders, das Trennpapier 5 Mal verwendend, vorliegt, nicht weniger als 5% beträgt.

15. Verfahren zur Herstellung eines geprägten Trennpapiers nach einem der Ansprüche 1 bis 14, **gekennzeichnet dadurch, dass** es die Schritte umfasst:
das Beschichten einer Beschichtungsflüssigkeit auf eine Oberfläche eines Trägers bei einer Bedeckung von 1 bis 40 g/m² auf einer Trockenbasis, um einen Beschichtungsfilm zu bilden;
das Verdampfen des Lösungsmittels aus dem Beschichtungsfilm, um den Beschichtungsfilm zu trocknen;
das Prägen entweder des getrockneten Beschichtungsfilms oder gleichzeitig des Trägers und des getrockneten Beschichtungsfilms; und
das Anwenden einer ionisierenden Strahlung auf den Beschichtungsfilm, um eine durch ionisierende Strahlung gehärtete Schicht zu bilden,
wobei die Beschichtungsflüssigkeit mindestens eine durch ionisierende Strahlung härtbare Zusammensetzung mit einem Erweichungspunkt von 40°C oder
höher umfasst, wobei die durch ionisierende Strahlung härtbare Zusammensetzung
ein Produkt einer Umsetzung einer Isocyanatverbindung mit einer (Meth)acrylverbindung, enthaltend eine (Meth)acryloylgruppe, und welche mit der Isocyanatverbindung reaktionsfähig ist, oder
ein Produkt einer Umsetzung einer Isocyanatverbindung mit einer (Meth)acrylverbindung, enthaltend eine (Meth)acryloylgruppe, und welche mit der Isocyanatverbindung reaktionsfähig ist, und einer Verbindung frei von einer (Meth)acryloylgruppe und welche mit einer Isocyanatgruppe reaktionsfähig ist, umfasst,
wobei die Beschichtungsflüssigkeit mit 10 bis 1000 Gewichtsteilen des Lösungsmittels, basierend auf 100 Gewichtsteilen auf einer Trockenbasis der Beschichtungsflüssigkeit, verdünnt wurde.

16. Verfahren zur Herstellung eines Kunstleders, das geprägte Trennpapier nach einem der Ansprüche 1 bis 14 verwendend, **gekennzeichnet dadurch, dass** es die Schritte umfasst:
das Beschichten einer Polyurethanharzzusammensetzung auf die geprägte, durch ionisierende Strahlung gehärtete Schicht und das Wärmetrocknen der Beschichtung, um eine Außenschicht zu bilden;
das Laminieren eines Trägergewebes auf die Außenschicht durch ein Haftmittel, um eine Kunstlederschicht zu bilden; und
das Abtrennen des Trennpapiers von der Kunstlederschicht.

17. Verfahren nach Anspruch 16, wobei das Haftmittel ein Polyurethanharz des zweikomponentenhärtenden Typs ist.

18. Verfahren nach Anspruch 16, wobei in dem Schritt des Laminierens des Trägergewebes, nachdem ein Haftmittel auf die Außenschicht aufgetragen wurde, um eine Beschichtung zu bilden, welche danach getrocknet wird, ein Trägergewebe auf das Haftmittel durch Warmlaminierung laminiert wird.

19. Verfahren zur Herstellung eines Kunstleders, ein geprägtes Trennpapier nach einem der Ansprüche 1 bis 14 verwendend, **gekennzeichnet dadurch, dass** es die Schritte umfasst:
das Beschichten einer Polyurethanharzzusammensetzung auf die geprägte, durch ionisierende Strahlung gehärtete Schicht und das Wärmetrocknen der Beschichtung, um eine Außenschicht zu bilden;
das Laminieren einer feuchten Zwischenschicht auf die Außenschicht und das Kontaktverbinden der Außenschicht mit der feuchten Zwischenschicht durch ein Warmwalzen von der Trennpapierseite aus, um eine Kunstlederschicht zu bilden; und
das Kühlen der Kunstlederschicht und anschließend das Abtrennen des Trennpapiers.

20. Verfahren zur Herstellung eines Kunstleders, ein geprägtes Trennpapier nach einem der Ansprüche 1 bis 14 verwendend, **gekennzeichnet dadurch, dass** es die Schritte umfasst:
das Beschichten einer Vinylchloridharzzusammensetzung auf die geprägte, durch ionisierende Strahlung gehärtete Schicht und das Wärmetrocknen der Beschichtung, um eine Außenschicht zu bilden;
das Beschichten einer expandierbaren Vinylchloridharzzusammensetzung auf die Außenschicht und das Erwärmen der Beschichtung, um eine Zwischenschicht zu bilden;
das Laminieren eines Trägergewebes auf die Zwischenschicht durch ein Haftmittel, um eine Kunstlederschicht zu bilden; und
das Abtrennen des Trennpapiers von der Kunstlederschicht.

21. Verfahren zur Herstellung eines Kunstleders, ein geprägtes Trennpapier nach einem der Ansprüche 1 bis 14 verwendend, **gekennzeichnet dadurch, dass** es die Schritte umfasst:
das Beschichten einer Polyurethanharzzusammensetzung auf die geprägte, durch ionisierende Strahlung gehärtete Schicht und das Wärmetrocknen der Beschichtung, um eine Außenschicht zu bilden;
das Beschichten einer expandierbaren Vinylchloridharzzusammensetzung auf die Außenschicht und das Erwärmen der Beschichtung, um eine Zwischenschicht zu bilden;
das Laminieren eines Trägergewebes auf die Zwischenschicht durch ein Haftmittel, um eine Kunstlederschicht zu bilden; und
das Abtrennen des Trennpapiers von der Kunstlederschicht.

22. Verfahren zur Herstellung eines Kunstleders, ein geprägtes Trennpapier nach einem der Ansprüche 1 bis 14 verwendend, **gekennzeichnet dadurch, dass** es die Schritte umfasst:
das Beschichten einer Polyurethanharzzusammensetzung auf die geprägte, durch ionisierende Strahlung gehärtete Schicht und das Wärmetrocknen der Beschichtung, um eine Außenschicht zu bilden;
das Beschichten einer expandierbaren Vinylchloridharzzusammensetzung auf die Außenschicht und das Erwärmen der Beschichtung, um eine Zwischenschicht zu bilden;
das Laminieren eines Trägergewebes auf die Zwischenschicht durch ein Haftmittel, um eine Kunstlederschicht zu bilden; und
das Abtrennen des Trennpapiers von der Kunstlederschicht.

23. Kunstleder, **gekennzeichnet dadurch, dass** es unter Verwendung eines geprägten Trennpapiers nach Anspruch 14 hergestellt wurde, wobei der Anteil an von Silikon stammendem Silicium, das auf dem Kunstleder in seiner getrennten Oberfläche, erhalten durch das Abtrennen des Trennpapiers, vorliegt, nicht mehr als 20% beträgt.

24. Kunstleder nach Anspruch 23, wobei das Trennpapier mehrmals verwendet wurde.

25. Kunstleder, hergestellt durch ein Verfahren nach einem der Ansprüche 17 bis 22.

26. Geprägtes Trennpapier nach einem der Ansprüche 1 bis 14, wobei der Träger ein Rohpapier umfasst, das auf einer seiner Seiten eine Tonbeschichtungsschicht aufweist, **dadurch gekennzeichnet, dass**
das Rohpapier eine solche Wärmebeständigkeit aufweist, dass die Zugfestigkeit, gemessen nach dem Stehen bei 230°C für 3 min durch das in JIS P 8113 spezifizierte Meßverfahren, zumindest in der Maschinenrichtung bei nicht weniger als 10 kN/m aufrechterhalten bleibt und die Reißfestigkeit, gemessen nach dem Stehen bei 230°C für 3 min durch das in JIS P 8116 spezifizierte Meßverfahren, sowohl in der Maschinenrichtung als auch in der Querrichtung bei nicht weniger als 500 mN aufrechterhalten bleibt, und
die Tonbeschichtungsschicht eine Ebenheit von nicht weniger als 100 sec, gemessen durch das in JIS P 8119 spezifizierte Meßverfahren, aufweist und derart gebildet worden ist, dass Oberflächenunregelmäßigkeiten, die von das Rohpapier bildenden Pulpefasern stammen, absorbiert sind,
wobei das Rohpapier ein neutrales Rohpapier ist und hergestellt worden ist, indem eine gemischte Pulpe verwendet wurde, die aus einer Hartholzpulpe und einer Weichholzpulpe zusammengesetzt ist, und der Anteil der Hartholzpulpe in der gemischten Pulpe 50 bis 90% beträgt.

27. Geprägtes Trennpapier nach Anspruch 26, wobei das neutrale Rohpapier mit einem Alkylketendimer geleimt ist.

28. Geprägtes Trennpapier nach Anspruch 26 oder 27, wobei das neutrale Rohpapier ein Rohgewicht von 100 bis 200 g/m² aufweist.

29. Geprägtes Trennpapier nach einem der Ansprüche 26 bis 28, wobei die Tonbeschichtungsschicht eine Bedeckung von 5 bis 40 g/m² aufweist.

## Revendications

1. Papier anti-adhésif embossé pour la production de similicuir, comprenant au moins du papier à titre de support et un film durci par rayonnement ionisant formé sur le papier, la partie supérieure du film durci ayant été embossée,
**caractérisé en ce que**
le film durci par rayonnement ionisant a été formé par application d'un rayonnement ionisant à un liquide de revêtement comprenant au moins une composition durcissable par rayonnement ionisant ayant un point de ramollissement de 40 °C ou au-dessus, pour durcir la composition durcissable par rayonnement ionisant, la composition durcissable par rayonnement ionisant comprenant
le produit de la réaction d'un composé d'isocyanate avec un composé (méth)acrylique contenant un groupe (méth)acryloyle et réactif avec le composé d'isocyanate, ou
le produit de la réaction d'un composé d'isocyanate avec un composé (méth)acrylique contenant un groupe (méth)acryloyle et réactif avec le composé d'isocyanate, et un composé dépourvu de groupe (méth)acryloyle et réactif avec un groupe isocyanate.

2. Papier anti-adhésif embossé selon la revendication 1, dans lequel le film durci par rayonnement ionisant comprend en outre de 1 à 70 % en poids d'une résine filmogène.

3. Papier anti-adhésif embossé selon la revendication 1, dans lequel le film durci par rayonnement ionisant comprend en outre de 0,5 à 20 % en poids d'un composé de silicone.

4. Papier anti-adhésif embossé selon l'une quelconque des revendications 1 à 3, dans lequel une couche d'étanchéité comprenant un pigment inorganique et une résine filmogène est formée sur la surface du support.

5. Papier anti-adhésif embossé selon l'une quelconque des revendications 1 à 4, dans lequel le film durci par rayonnement ionisant a une structure multicouche constituée d'au moins deux couches.

6. Papier anti-adhésif embossé selon la revendication 5, dans lequel, dans le film durci par rayonnement ionisant ayant une structure multicouche constituée d'au moins deux couches, 0,5 à 50 % en poids d'un pigment inorganique sont contenus dans une ou au moins deux couches.

7. Papier anti-adhésif embossé selon les revendications 5 ou 6, dans lequel, dans le film durci par rayonnement ionisant ayant une structure multicouche constituée d'au moins deux couches, 0,5 à 50 % en poids d'un pigment inorganique sont contenus dans la couche la plus basse formée côté support.

8. Papier anti-adhésif embossé selon l'une quelconque des revendications 5 à 7, dans lequel, dans le film durci par rayonnement ionisant ayant une structure multicouche constituée d'au moins deux couches, 0,5 à 20 % en poids d'un composé de silicone sont contenus dans une ou au moins deux couches.

9. Papier anti-adhésif embossé selon l'une quelconque des revendications 5 à 8, dans lequel, dans le film durci par rayonnement ionisant ayant une structure multicouche constituée d'au moins deux couches, 0,5 à 20 % en poids d'un composé de silicone sont contenus dans la couche la plus haute formée côté distant du support.

10. Papier anti-adhésif embossé selon l'une quelconque des revendications 5 à 9, dans lequel, dans le film durci par rayonnement ionisant ayant une structure multicouche constituée de deux couches ou plus,
0,5 à 50 % en poids d'un pigment inorganique sont contenus dans la couche la plus basse formée côté support, et
0,5 à 20 % en poids d'un composé de silicone sont contenus dans la couche la plus haute formée côté distant du support.

11. Papier anti-adhésif embossé selon l'une quelconque des revendications 5 à 9, dans lequel, dans le film durci par rayonnement ionisant ayant une structure multicouche constituée de deux couches ou plus,
0,5 à 50 % en poids d'un pigment inorganique sont contenus dans la couche la plus basse formée côté support, et
0,5 à 20 % en poids d'un composé de silicone sont contenus dans chaque couche.

12. Papier anti-adhésif embossé selon l'une quelconque des revendications 1 à 11, dans lequel le papier utilisé comme support est un papier neutre.

13. Papier anti-adhésif embossé selon l'une quelconque des revendications 1 à 12, dans lequel le papier utilisé comme support a été embossé.

14. Papier anti-adhésif embossé selon la revendication 3, dans lequel la proportion de silicium dérivé de silicone présente sur la surface du film durci par rayonnement ionisant est de 5 à 30 %, et la proportion de silicium dérivé de silicone présente sur la surface du film durci par rayonnement ionisant après la répétition de la production d'un similicuir à l'aide du papier anti-adhésif à 5 reprises n'est pas inférieure à 5 % en poids.

15. Procédé de production d'un papier anti-adhésif embossé selon l'une quelconque des revendications 1 à 14, **caractérisé en ce qu'**il comprend les étapes suivantes :
application d'un liquide de revêtement sur une surface d'un support à une couverture de 1 à 40 g/m² sur une base sèche pour former un film de revêtement ;
évaporation du solvant contenu dans le film de revêtement pour sécher le film de revêtement ;
embossage soit du film de revêtement séché, soit du support et du film de revêtement séché simultanément ; et
application d'un rayonnement ionisant au film de revêtement pour former un film durci par rayonnement ionisant,
le liquide de revêtement comprenant au moins une composition durcissable par rayonnement ionisant ayant un point de ramollissement de 40 °C ou au-dessus, la composition durcissable par rayonnement ionisant comprenant
le produit de la réaction d'un composé d'isocyanate avec un composé (méth)acrylique contenant un groupe (méth)acryloyle et réactif avec le composé d'isocyanate, ou
le produit de la réaction d'un composé d'isocyanate avec un composé (méth)acrylique contenant un groupe (méth)acryloyle et réactif avec le composé d'isocyanate, et un composé dépourvu de groupe (méth)acryloyle et réactif avec un groupe isocyanate,
le liquide de revêtement ayant été dilué avec 10 à 1000 parties en poids de solvant pour 100 parties en poids sur une base solide du liquide de revêtement.

16. Procédé de production d'un similicuir à l'aide du papier anti-adhésif embossé selon l'une quelconque des revendications 1 à 14, **caractérisé en ce qu'**il comprend les étapes suivantes :
application d'une composition de résine polyuréthanne sur le film durci par rayonnement ionisant embossé et séchage à la chaleur du revêtement pour former une couche de peau ;
stratification d'une étoffe de support sur la couche de peau au moyen d'un adhésif pour former une couche de similicuir ; et
séparation du papier anti-adhésif de la couche de similicuir.

17. Procédé selon la revendication 16, dans lequel l'adhésif est une résine polyuréthanne en deux parties de type durcissable.

18. Procédé selon la revendication 16, dans lequel, dans l'étape de stratification de l'étoffe de support, après qu'un adhésif est appliqué sur la couche de peau pour former un revêtement qui est ensuite séché, une étoffe de support est stratifiée sur l'adhésif par stratification à chaud.

19. Procédé de production d'un similicuir à l'aide du papier anti-adhésif embossé selon l'une quelconque des revendications 1 à 14, **caractérisé en ce qu'**il comprend les étapes suivantes :
application d'une composition de résine polyuréthanne sur le film durci par rayonnement ionisant embossé et séchage à la chaleur du revêtement pour former une couche de peau ;
stratification d'une couche intermédiaire humide sur la couche de peau et liaison par contact de la couche de peau à la couche intermédiaire humide par rouleau chaud côté papier anti-adhésif pour former une couche de similicuir ; et
refroidissement de la couche de similicuir, puis séparation du papier anti-adhésif.

20. Procédé de production d'un similicuir à l'aide d'un papier anti-adhésif embossé selon l'une quelconque des revendications 1 à 14, **caractérisé en ce qu'**il comprend les étapes suivantes :
application d'une composition de résine chlorure de vinyle sur le film durci par rayonnement ionisant embossé et séchage à chaud du revêtement pour former une couche de peau ;
application d'une composition de résine chlorure de vinyle expansible sur la couche de peau et chauffage du revêtement pour former une couche intermédiaire ;
stratification d'une étoffe de support sur la couche intermédiaire au moyen d'un adhésif pour former une couche de similicuir ; et
séparation du papier anti-adhésif de la couche de similicuir.

21. Procédé de production d'un similicuir à l'aide d'un papier anti-adhésif embossé selon l'une quelconque des revendications 1 à 14, **caractérisé en ce qu'**il comprend les étapes suivantes :
application d'une composition de résine polyuréthanne sur le film durci par rayonnement ionisant embossé et séchage à la chaleur du revêtement pour former une couche de peau ;
application d'une composition de résine chlorure de vinyle expansible sur la couche de peau et chauffage du revêtement pour former une couche intermédiaire ;
stratification d'une étoffe de support sur la couche intermédiaire au moyen d'un adhésif pour former une couche de similicuir ; et
séparation du papier anti-adhésif de la couche de similicuir.

22. Procédé de production d'un similicuir à l'aide d'un papier anti-adhésif embossé selon l'une quelconque des revendications 1 à 14, **caractérisé en ce qu'**il comprend les étapes suivantes :
application d'une composition de résine polyuréthanne sur le film durci par rayonnement ionisant embossé et séchage à la chaleur du revêtement pour former une couche de peau ;
application d'une composition de résine chlorure de vinyle expansible sur la couche de peau et chauffage du revêtement pour former une couche intermédiaire ;
stratification d'une étoffe de support sur la couche intermédiaire au moyen d'un adhésif pour former une couche de similicuir ; et
séparation du papier anti-adhésif de la couche de similicuir.

23. Similicuir **caractérisé en ce qu'**il est produit à l'aide d'un papier anti-adhésif embossé selon la revendication 14, la quantité de silicium dérivé de silicone présente sur le similicuir sur sa surface séparée obtenue par séparation du papier anti-adhésif n'étant pas supérieure à 20 %.

24. Similicuir selon la revendication 23, dans lequel le papier anti-adhésif a été utilisé une pluralité de fois.

25. Similicuir produit par un procédé selon l'une quelconque des revendications 17 à 22.

26. Papier anti-adhésif embossé selon l'une quelconque des revendications 1 à 14, dans lequel le support comprend un papier de base couché au kaolin sur l'une de ses faces, **caractérisé en ce que**
le papier de base a une résistance à la chaleur telle que sa résistance en traction mesurée après passage à 230 °C pendant 3 min par le procédé de mesure spécifié dans JIS P 8113 est maintenue à pas moins de 10 kN/m au moins dans le sens machine et que sa résistance à la déchirure mesurée après passage à 230 °C pendant 3 min par le procédé de mesure spécifié dans JIS P 8116 est maintenue à pas moins de 500 mN à la fois dans le sens machine et dans le sens travers, et
le côté couché au kaolin a un lissé mesurée par le procédé de mesure spécifié dans JIS P 8119 qui n'est pas inférieure à 100 sec et a été formé de façon que les irrégularités de surface dérivées des fibres de pâte à papier constituant le papier de base soient absorbées, le papier de base étant un papier neutre qui a été formé à l'aide d'un mélange de pâtes à papier composé d'une pâte de bois dur et d'une pâte de bois tendre, la teneur de pâte de bois dur dans le mélange de pâtes à papier étant de 50 à 90 %.

27. Papier anti-adhésif embossé selon la revendication 26, dans lequel le papier de base neutre est encollé avec un dimère d'alkylcétène.

28. Papier anti-adhésif embossé selon les revendications 26 ou 27, dans lequel le papier de base neutre a un grammage de 100 à 200 g/m².

29. Papier anti-adhésif embossé selon l'une quelconque des revendications 26 à 28, dans lequel le côté couché au kaolin a une couverture de 5 à 40 g/m².
